(19) Europäisches Patentamt
European Patent Office
Office européen des brevets

(11) **EP 3 742 356 A1**

(12) **EUROPEAN PATENT APPLICATION**
published in accordance with Art. 153(4) EPC

(43) Date of publication:
**25.11.2020 Bulletin 2020/48**

(51) Int Cl.:
**G06N 20/00** (2019.01)

(21) Application number: **18901786.6**

(86) International application number:
**PCT/JP2018/047114**

(22) Date of filing: **20.12.2018**

(87) International publication number:
**WO 2019/142597 (25.07.2019 Gazette 2019/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.01.2018 JP 2018007596**

(71) Applicant: **Sony Corporation**
**108-0075 Tokyo (JP)**

(72) Inventors:
• **TAKAMATSU, Shingo**
**Tokyo 108-0075 (JP)**
• **MIYAHARA, Masanori**
**Tokyo 108-0075 (JP)**
• **NAKADA, Kento**
**Tokyo 108-0075 (JP)**
• **HORIGUCHI, Yuji**
**Tokyo 108-0075 (JP)**
• **IIDA, Hiroshi**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD AND PROGRAM**

(57)  [Problem] To provide a mechanism capable of more appropriately specifying reasons of prediction by a prediction model.

[Solution] Provided is an information processing apparatus including a control unit configured to extract a characteristic amount set from characteristic amounts included in a plurality of pieces of input data input to a prediction model configured by a non-linear model, in which an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set to a prediction result by the prediction model is equal to or less than a second threshold.

FIG.1

EP 3 742 356 A1

**Description**

Field

The present disclosure relates to an information processing apparatus, an information processing method, and a program.

Background

In recent years, prediction using a prediction model (in other words, recognition model) configured by a non-linear model such as a neural network has been used in various fields. The prediction model configured by the non-linear model is a black box with an unknown internal behavior. Therefore, it has been difficult to specify reasons of prediction, for example, how much a characteristic amount, of characteristic amounts of data input to the prediction model, contributes to a prediction result.

Concerning prediction using a prediction model, the following Patent Literature 1 discloses a technology of predicting probabilities of occurrence of life events using a prediction model and displaying the life events in chronological order on the basis of the predicted probabilities.

Citation List

Patent Literature

Patent Literature 1: JP 2017-27145 A

Summary

Technical Problem

However, with the technology disclosed in the above-described Patent Literature 1, only probabilities of occurrence of life events in the future are predicted using a prediction model, and the technology is insufficient as a technology for specifying reasons of prediction.

Therefore, the present disclosure proposes a mechanism capable of more appropriately specifying reasons of prediction by a prediction model.

Solution to Problem

According to the present disclosure, an information processing apparatus is provided that includes: a control unit that extracts a characteristic amount set from characteristic amounts included in a plurality of pieces of input data input to a prediction model configured by a non-linear model, wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set to a prediction result by the prediction model is equal to or less than a second threshold.

Moreover, according to the present disclosure, an information processing method is provided that includes: extracting by a processor, a characteristic amount set from characteristic amounts included in a plurality of pieces of input data input to a prediction model configured by a non-linear model, wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set, to a prediction result by the prediction model is equal to or less than a second threshold.

Moreover, according to the present disclosure, a program is provided that causes a computer to function as: a control unit that extracts a characteristic amount set from characteristic amounts included in a plurality of pieces of input data input to a prediction model configured by a non-linear model, wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set, to a prediction result by the prediction model is equal to or less than a second threshold.

Advantageous Effects of Invention

As described above, according to the present disclosure, a mechanism capable of more appropriately specifying reasons of prediction by a prediction model is proposed. Note that the above-described effect is not necessarily restrictive, and any one of effects described in the present specification or any another effect obtainable from the present specification may be exhibited in addition to or in place of the above-described effect.

Brief Description of Drawings

FIG. 1 is a diagram for describing a black box property of a non-linear model.
FIG. 2 is a block diagram illustrating an example of a logical configuration of an information processing apparatus according to an embodiment of the present disclosure.
FIG. 3 is a flowchart illustrating an example of flow of generation processing of a one-of-k vector to be executed by the information processing apparatus according to the embodiment.
FIG. 4 is a flowchart illustrating an example of flow of generation processing of a characteristic amount vector to be executed by the information processing apparatus according to the embodiment.
FIG. 5 is a flowchart illustrating an example of flow of learning processing to be executed by the information processing apparatus according to the embodiment.
FIG. 6 is a flowchart illustrating an example of flow of characteristic amount set extraction processing to be executed by the information processing apparatus according to the embodiment.
FIG. 7 is a diagram for describing an example of a UI according to the present embodiment.
FIG. 8 is a diagram for describing an example of a UI according to the present embodiment.
FIG. 9 is a diagram for describing an example of a UI according to the present embodiment.
FIG. 10 is a diagram for describing an example of a UI according to the present embodiment.
FIG. 11 is a diagram for describing an example of a UI according to a first modification.
FIG. 12 is a diagram for describing an example of a UI according to the first modification.
FIG. 13 is a diagram for describing an example of a UI according to a second modification.
FIG. 14 is a block diagram illustrating an example of a hardware configuration of the information processing apparatus according to the present embodiment.

Description of Embodiments

Favorable embodiments of the present disclosure will be described in detail with reference to the appended drawings. Note that, in the present specification and drawings, redundant description of a configuration element having substantially the same functional configuration is omitted by providing the same sign.
Note that the description will be given in the following order.

1. Introduction
1.1. Black Box Property of Prediction Model
1.2. Technical problems
1.3. Outline of Proposed Technology
2. Configuration example
3. Technical characteristics
3.1. Case Setting
3.2. Preprocessing
3.3. Learning Processing
3.4. Contribution Degree Calculation Processing
3.5. Characteristic amount set extraction processing
3.6. Display control processing
4. Modification
4.1. First Modification
4.2. Second Modification
5. Hardware configuration example
6. Conclusion

<<1. INTRODUCTION>>

<1.1. Black Box Property of Prediction Model >

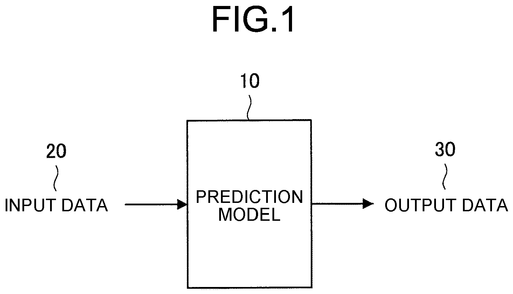

FIG. 1 is a diagram for describing a black box property of a non-linear model. As illustrated in FIG. 1, a prediction model 10 outputs output data 30 when input data 20 is input. For example, when an image is input as the input data 20, information indicating what is captured in the image is output as the output data 30. Furthermore, when a document is input as the input data 20, information indicating what category the document is about is output as the output data 30. Furthermore, when user information is input as the input data 20, information indicating what product a user corresponding to the user information will purchase is output as the output data 30.

The prediction model 10 is learned in advance on the basis of teacher data including a plurality of combinations of input data and output data to be output when the input data is input. In a case where the prediction model 10 is configured by a non-linear model, the prediction model 10 is a black box with an unknown internal behavior. Therefore, it is difficult to specify grounds of prediction by the prediction model 10. A neural network is an example of such a non-linear model.

A neural network typically has a network structure including three layers of an input layer, an intermediate layer, and an output layer, and in which nodes included in the respective layers are connected by a link. When the input data is input to the input layer, operations at the nodes and weighting at the links are performed in the order from the input layer to the intermediate layer, and from the intermediate layer to the output layer, and the output data is output from the output layer. Among neural networks, those having a predetermined number or more of layers are also referred to as deep learning.

It is known that neural networks can approximate arbitrary functions. A neural network can learn a network structure that fits teacher data by using a calculation technique such as back propagation. Therefore, by configuring a prediction model by a neural network, the prediction model is freed from restriction of expressiveness designed within a range that can be understood by a person. Meanwhile, the prediction model can be designed beyond the range that can be understood by a person. In that case, it is difficult to understand what the prediction model uses as the basis for prediction.

<1.2. Technical problems>

A case is assumed where input data is item-type data, and output data is a prediction probability. Examples of the item-type data can include user information including a continuous value such as age, and a categorical value such as residential prefecture and gender. Data in each item included in the input data will be also referred to as a characteristic amount in the following description. The prediction probability corresponds to a probability that a user corresponding to the input user information performs, for example, specific behavior. Note that it may be regarded that the output data includes a prediction label indicated by the prediction probability. The prediction label is a label output from the prediction model, and, for example, in a case where the prediction probability is a purchase probability, if the purchase probability exceeds 50%, the prediction label is "purchase", and if the purchase probability is less than 50%, the prediction label is "not purchase".

As described above, it is difficult to understand what the prediction model uses as the basis for prediction in the non-linear model. Therefore, the present disclosure provides a mechanism capable of specifying reasons of prediction by a prediction model.

There is a case where combination of specific characteristic amounts contributes to prediction more largely than each single characteristic amount. In other words, there is a case where combination of specific characteristic amounts may create a synergy effect. This tendency is higher as the prediction model is more complicated. In this case, as reasons of prediction, it is preferable that combination of characteristic amounts which creates such a synergy effect is specified. However, because the number of types of combination of characteristic amounts is affected by so-called curse of dimensionality, that is, increases at a rate proportional to a power of the number of characteristic amounts, it is difficult to confirm whether or not there is a synergy effect for combination of all characteristic amounts in terms of a calculation amount. Therefore, the present disclosure provides a mechanism which is capable of efficiently specifying combination of characteristic amounts which creates a synergy effect.

<1.3. Outline of Proposed Technology>

Outline of the proposed technology will be described below.

In the proposed technology, first, learning data in which a plurality of pieces of input data to be learned is associated with output data (that is, teacher labels) corresponding to the input data is input to an information processing apparatus, and a prediction model is learned. Then, the information processing apparatus receives input of a plurality of pieces of input data which is a prediction target, and performs prediction on the basis of the input data. Further, the information processing apparatus extracts a characteristic amount set by calculating a degree of contribution of each of a plurality of characteristic amounts included in the plurality of pieces of input data which is a prediction target, and collecting characteristic amounts which have specific tendency in the degree of contribution as combination of characteristic amounts which creates a synergy effect. Here, the degree of contribution is a degree of contribution to a prediction result by the prediction model. The characteristic amount set is a set which includes one or more characteristic amounts, and which does not include a plurality of characteristic amounts belonging to the same item. That is, the characteristic amount set is concept including the characteristic amount. Further, the information processing apparatus 100 generates and outputs output information including information indicating reasons of prediction on the basis of the extracted characteristic amount set.

Particularly, in the proposed technology, the characteristic amount set is generated on the basis of an average and dispersion of influence (output difference which will be described later) of presence of a characteristic amount on the prediction result. By this means, it is possible to efficiently specify combination of characteristic amounts which creates a synergy effect concerning prediction.

The present technology can be utilized in marketing, prevention of withdrawal from service, presentation of reasons for recommendation or support of business operation such as input assistance of user profile. For example, a first user inputs learning data and user information of a second user to the information processing apparatus 100. The information processing apparatus 100 performs prediction regarding the second user and outputs output information indicating reasons of prediction. Then, the first user takes various kinds of measures for the second user in accordance with purpose on the basis of the output information.

<<2. Configuration Example>>

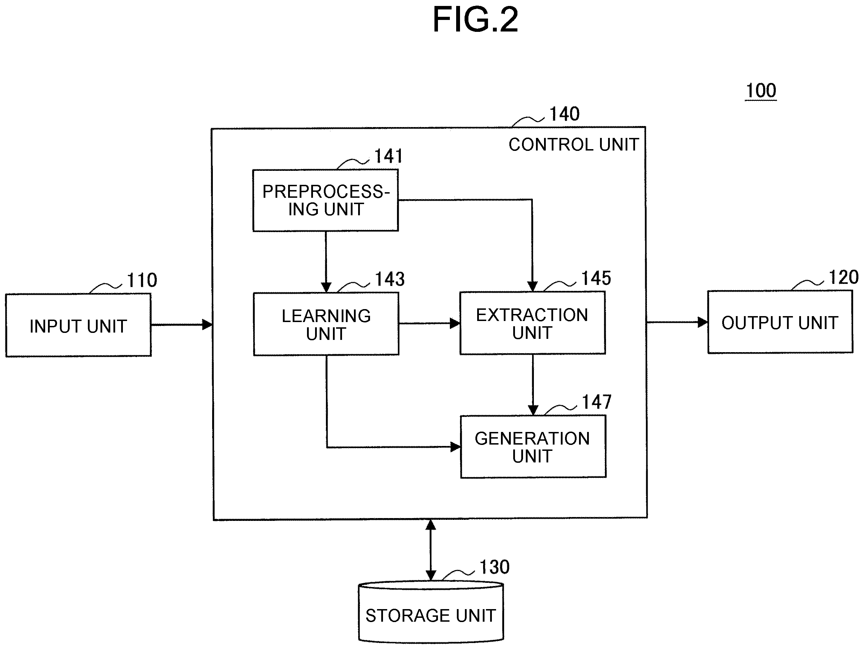

FIG. 2 is a block diagram illustrating an example of a logical configuration of an information processing apparatus according to an embodiment of the present disclosure. As illustrated in FIG. 2, an information processing apparatus 100 according to the present embodiment includes an input unit 110, an output unit 120, a storage unit 130, and a control unit 140.

The input unit 110 has a function to input information. The input unit 110 inputs various types of information such as teacher data for constructing a prediction model, input data to be input to the prediction model, and setting information related to characteristic amount extraction. The input unit 110 outputs the input information to the control unit 140.

The output unit 120 has a function to output information. The output unit 120 outputs various types of information such as output data output from the prediction model and the reasons of prediction. The output unit 120 outputs information output from the control unit 140.

The storage unit 130 has a function to temporarily or permanently store information. For example, the storage unit 130 stores learning data and input data which is a prediction target, and a learning result of the prediction model.

The control unit 140 has a function to control an overall operation of the information processing apparatus 100. As illustrated in FIG. 2, the control unit 140 includes a preprocessing unit 141, a learning unit 143, an extraction unit 145, and a generation unit 147. The preprocessing unit 141 has a function to apply preprocessing to the input data. The learning unit 143 has a function to learn the prediction model configured by a non-linear model. The extraction unit 145 has a function to extract a characteristic amount set from the input data input to the prediction model. The generation unit 147 has a function to generate the output information on the basis of an extraction result of the characteristic amount set. Operation processing of each of the configuration elements will be described in detail below.

<<3. Technical characteristics>>

<3.1. Case Setting>

Technical features of the present technology will be described below using an example of a case of selling music players to customers of music distribution service by phone.

The first user is a seller who sells music players by phone. The second user is a customer who has purchased a music player or who may purchase a music player in the future. The input data to be input to the prediction model is attribute information (that is, user information) of the customer. The attribute information includes, for example, age, gender, address, music which has been listened to in the past, a genre of music which is often listened to, a device to be used, the number of months during which subscription is continued, the number of times of reproduction per month, or the like. Here, the attribute information includes characteristic amounts which take categorical values such as gender and address, and characteristic amounts which take continuous values such as age and the number of times of reproduction per month. The output data to be output from the prediction model is a purchase probability of a music player.

The storage unit 130 stores customer information of each customer. The customer information includes attribute information of the customer, and purchase information of a music player. The purchase information of a music player includes information indicating whether or not a music player has been purchased, and, in a case where a music player has been purchased, information in which purchase date and time and payment information are associated. The purchase information is regarded as a teacher label in learning processing.

Because selling by phone involves cost such as personnel cost, if selling by phone is performed on all customers of music distribution service, cost increases. Therefore, the information processing apparatus 100 constructs a prediction model to predict a purchase probability of a music player from the attribute information of the customer. A seller can make a phone call to only customers with high prediction probabilities, so that cost is suppressed.

Further, the information processing apparatus 100 specifies and presents reasons of prediction to the seller. The seller can utilize the reasons of prediction in conversation with the customer.

Further, the information processing apparatus 100 specifies overall tendency of the customers and presents the tendency to the seller. By this means, for example, a marketer among the sellers can grasp overall tendency of the customers who have purchased music players and can utilize the overall tendency in planning marketing strategy.

<3.2. Preprocessing>

The information processing apparatus 100 (for example, a preprocessing unit 141) performs preprocessing on the input data. For example, the information processing apparatus 100 performs preprocessing called OneHot to convert each characteristic amount included in the attribute information into a one-of-k vector. The one-of-k vector is a vector in which only one element takes a value of 1, and remaining (k-1) elements take a value of 0. The information processing apparatus 100 generates a characteristic amount vector by converting respective characteristic amounts into one-of-k vectors and connecting the respective one-of-k vectors in predetermined order.

Generation processing of a one-of-k vector will be described in detail. First, the information processing apparatus 100 lists values which can be taken concerning one item, generates a vector in a dimension which is the same as a dimension of the number of values which can be taken, and determines a dimension corresponding to the values which can be taken. Upon generation of a one-of-k vector, the information processing apparatus 100 converts a characteristic amount into a one-of-k vector by setting 1 at a dimension corresponding to the characteristic amount and setting 0 at the remaining dimensions. For example, in a case where age is converted into a one-of-k vector, the information processing apparatus 100 prepares an 82-dimensional vector from 18 years old to 99 years old as values which can be taken, and causes the dimensions from the first dimension to sequentially correspond to age from 18 years old. Then, for example, concerning a characteristic amount indicating that age is 20 years old, the information processing apparatus 100 generates an 82-dimensional one-of-k vector in which the third dimension is 1 and the remaining dimensions are 0.

However, concerning characteristic amounts which take continuous values, values may be rounded to some extent. For example, concerning age, 20 years old to 29 years old may be set as twenties. Meanwhile, concerning characteristic amounts which take categorical values, it is preferable not to round values. For example, the information processing apparatus 100 prepares vectors of dimensions corresponding to the number of types of genre concerning behavior history information such as music genre which the user has listened to in the past, and generates a vector in which 1 is set at a dimension corresponding to the music genre which the user has listened to in the past, and 0 is set at the remaining dimensions.

Further, concerning an item including a deficit, the information processing apparatus 100 generates a vector in which 0 is set at all dimensions. For example, concerning attribute information in which there is no value in an item of age, the information processing apparatus 100 generates an 82-dimensional vector in which 0 is set at all dimensions. By this means, the number of dimensions of characteristic amount vectors of all users including a user for whom there is a deficit in a characteristic amount becomes equal.

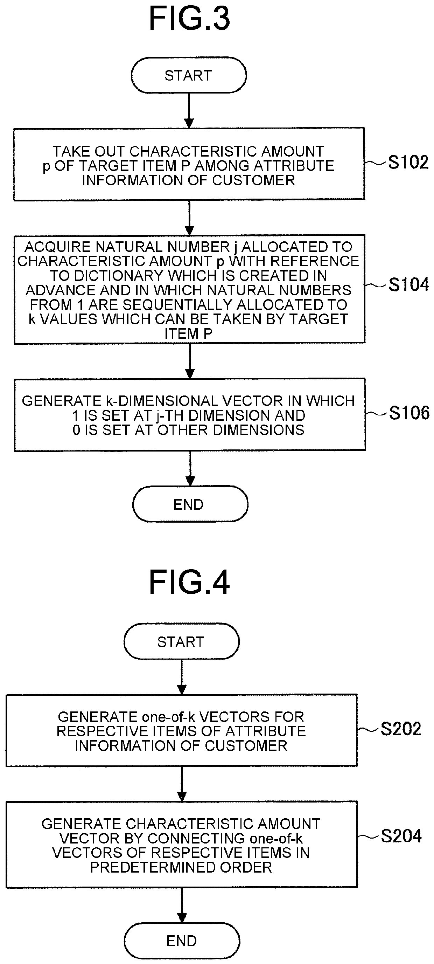

An example of flow of the preprocessing will be described below with reference to FIG. 3 and FIG. 4

FIG. 3 is a flowchart illustrating an example of flow of generation processing of a one-of-k vector to be executed by the information processing apparatus 100 according to the embodiment. As illustrated in FIG. 3, first, the preprocessing unit 141 takes out a characteristic amount p of a target item P among the attribute information of the customer (step S102). Then, the preprocessing unit 141 acquires a natural number j allocated to the characteristic amount p with reference to a dictionary which is created in advance and in which natural numbers from 1 are sequentially allocated to k values which can be taken by the target item P (step S104). Then, the preprocessing unit 141 generates a k-dimensional vector in which 1 is set at the j-th dimension and 0 is set at other dimensions (step S106).

FIG. 4 is a flowchart illustrating an example of flow of generation processing of a characteristic amount vector to be executed by the information processing apparatus 100 according to the embodiment. As illustrated in FIG. 4, first, the preprocessing unit 141 generates one-of-k vectors for respective items of the attribute information of the customer (step S202). Then, the preprocessing unit 141 generates a characteristic amount vector by connecting the one-of-k vectors of the respective items in predetermined order (step S204).

The characteristic amount vector generated in this manner becomes input data to the prediction model.

<3.3. Learning Processing>

The information processing apparatus 100 (for example, the learning unit 143) learns the prediction model. The information processing apparatus 100 learns parameters (various parameters such as a link, a weight, a bias, and an activation function) for constructing the prediction model that matches the learning data. The above-described preprocessing is also performed for the learning data.

The prediction model is configured by a non-linear model. The prediction model targeted by the present technology is a model having a black box property (also referred to as a black box model). For example, the prediction model may be configured by an arbitrary non-linear model such as a neural network, a support vector machine, or a hidden Markov model. Hereinafter, description will be given on the assumption that the prediction model is configured by a neural network. The following is a formulation of the prediction model.

Whether or not a music player has been purchased is expressed as in the following expression.

$$y_i \in \{1,0\} \tag{1}$$

Here, i is an index of the customer. It is assumed that the number of customers is n. $y_i$ is 1 in a case where a customer i has purchased a music player, and 0 in a case where the customer i has not purchased a music player.

The characteristic amount vector generated on the basis of the attribute information of the customer is expressed as in the following expression. Note that d is the number of dimensions of the characteristic amount vector.

$$\left(x_y\right) = x_i \in R^d \tag{2}$$

The information processing apparatus 100 generates combination of the characteristic amount vector based on the attribute information of the customer and information indicating whether or not a music player has been purchased as learning data on the basis of each of a plurality of pieces of customer information to be learned. Such combination will be also referred to as a data sample in the following description. The i-th data sample is expressed as $(x_i, y_i)$. The information processing apparatus 100 generates a data sample from the information stored in the storage unit 130. Note that $y_i$ is a teacher label.

Prediction by the prediction model is expressed as in the following expression.

$$p(y_i = 1 | x_i) = f(x_i; w) \tag{3}$$

$$w \in R^D \tag{4}$$

Here, f is a function for calculating a purchase probability that a customer will purchase a music player, corresponding to the characteristic amount vector $x_i$. As described above, it is assumed that f is a neural net. w is a parameter of the prediction model. D is the number of parameters of the prediction model.

The information processing apparatus 100 learns the parameter of the prediction model by, for example, setting a cross entropy loss as an error function and executing a gradient method on a sum of error functions of data samples $(x_i, y_i)$ of all customers.

Note that the customer information to be used for learning may be different from or partially or completely the same as the customer information to be used for prediction.

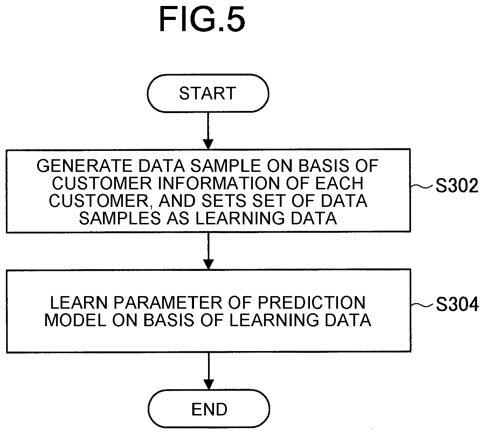

An example of flow of learning processing will be described below with reference to FIG. 5.

FIG. 5 is a flowchart illustrating an example of flow of learning processing to be executed by the information processing apparatus 100 according to the embodiment. As illustrated in FIG. 5, first, the learning unit 143 generates a data sample constituted with combination of the characteristic amount vector based on the attribute information of the customer and information indicating whether or not a music player has been purchased on the basis of customer information of each customer, and sets a set of data samples as learning data (step S302). Then, the learning unit 143 learns the parameter of the prediction model on the basis of the learning data (step S304). In detail, the learning unit 143 performs learning using information indicating whether or not a music player has been purchased corresponding to the characteristic amount vector as a teacher label, while calculating a purchase probability of a music player of each customer by inputting the characteristic amount vector based on the attribute information of the customer to the prediction model.

<3.4. Contribution Calculation Processing>

The information processing apparatus 100 (for example, an extraction unit 145) calculates a degree of contribution of the characteristic amount. The degree of contribution includes two types: a degree of contribution in individual input data; and a degree of contribution in the whole input data. The degree of contribution in individual input data is a degree of contribution of the characteristic amount included in one piece of input data, to prediction based on the input data. The degree of contribution in the whole input data is tendency of the degree of contribution of a certain characteristic amount in individual input data, in the whole of a plurality of pieces of input data including the characteristic amount. In the following description, unless otherwise specified, the degree of contribution indicates the degree of contribution in the whole input data.

There can be various calculation methods of the degree of contribution. Three types of calculation methods will be described below as an example.

(1) First contribution degree calculation method

The first contribution degree calculation method is a method in which a characteristic amount for which a degree of contribution is to be calculated is excluded from input to the prediction model, and the degree of contribution is calculated on the basis of change in the prediction result before and after the characteristic amount is excluded. In detail, the information processing apparatus 100 calculates an average of change values (hereinafter, also referred to as output differences) from a prediction result obtained by inputting each piece of input data included in a plurality of pieces of input data to the prediction model, to a prediction result obtained by excluding a characteristic amount set for which the degree of contribution is to be calculated, from the input data, as the degree of contribution of the characteristic amount set. Here, the input data is the characteristic amount vector generated on the basis of the attribute information of the customer.

• Degree of contribution of characteristic amount

First, processing of calculating a degree of contribution of one characteristic amount will be described. The information processing apparatus 100 calculates an output difference of the prediction model in a case where 0 is set at a non-zero element corresponding to a characteristic amount to be calculated in the characteristic amount vector (that is, input data) having a characteristic amount for which the degree of contribution is to be calculated, as the degree of contribution of the characteristic amount. For example, an output difference $c_{ij}$ of the prediction model in a case where 0 is set at a non-zero element (which is assumed to be at the j-th dimension) corresponding to the characteristic amount for which the degree of contribution is to be calculated, in the i-th characteristic amount vector among a plurality of characteristic amount vectors, is expressed with the following expression.

$$c_{ij} = f(x_i; w) - f(x_i^{-j}; w)$$

$$(5)$$

Here, w is a parameter of the prediction model which has been learned. $x_i^{-j}$ is a vector in which 0 is set at a non-zero element of the j-th dimension of the characteristic amount vector $x_i$. The output difference $c_{ij}$ corresponds to the degree of contribution in individual input data.

The information processing apparatus 100 calculates the degree of contribution $c_j$ of the characteristic amount (j-th dimension) for which the degree of contribution is to be calculated as an average for a plurality of pieces of input data as in the following expression.

$$c_j = \frac{1}{|I_j|} \sum_{i \in I_j} c_{ij}$$

$$(6)$$

Here, $I_j$ is a set of indexes of the characteristic amounts in which the j-th dimension is non-zero. The degree of contribution $c_j$ corresponds to the degree of contribution in the whole input data.

• Degree of contribution of characteristic amount set

Processing of calculating a degree of contribution of a characteristic amount set S will be described next. The information processing apparatus 100 calculates an output difference of the prediction model in a case where 0 is set at non-zero elements corresponding to one or more characteristic amounts included in the characteristic amount set, in the characteristic amount vector (that is, input data) having a characteristic amount set for which the degree of contribution is to be calculated, as the degree of contribution of the characteristic amount set. For example, an output difference $c_{iS}$ of the prediction model in a case where 0 is set at non-zero elements corresponding to one or more characteristic amounts included in the characteristic amount set S for which the degree of contribution is to be calculated, in the i-th characteristic amount vector among a plurality of characteristic amount vectors, is expressed with the following expression.

$$c_{iS} = f(x_i; w) - f(x_i^{-S}; w)$$

$$(7)$$

Here, $x_i^{-S}$ is a vector in which a non-zero element corresponding to the characteristic amount included in the characteristic amount set S is changed to 0 in the characteristic amount vector $x_i$. The output difference $c_{iS}$ corresponds to the degree of contribution in individual input data.

The information processing apparatus 100 calculates the degree of contribution $c_S$ of the characteristic amount set S for which the degree of contribution is to be calculated as the average for a plurality of pieces of input data as in the following expression.

$$c_S = \frac{1}{|I_S|} \sum_{i \in I_S} c_{iS}$$

$$(8)$$

Here, $I_S$ is a set of indexes of characteristic amount vectors in which dimensions corresponding to one or more characteristic amounts included in the characteristic amount set S are non-zero. The degree of contribution cs corresponds to the degree of contribution in the whole input data.

The first contribution degree calculation method has been described above.

Here, a positive value of the degree of contribution (average of output differences) means that the characteristic amount set positively contributes to prediction, and a negative value of the degree of contribution means that the characteristic amount set negatively contributes to prediction. Note that, in the present specification, positive contribution means that a prediction probability (that is, a purchase probability) predicted by the prediction model is improved, and negative contribution means the prediction probability predicted by the prediction model is lowered.

(2) Second contribution degree calculation method

The second contribution degree calculation method is a method in which, instead of an output difference of the prediction model as to whether or not there is a characteristic amount set being directly calculated, a differential value of an error function in a non-zero dimension is calculated as an approximate value of the above-described output difference. In other words, the second contribution degree calculation method is a method in which second-order approximation is performed for each element of the characteristic amount vector, to approximately calculate an output difference in a case where the characteristic amount set is not included (that is, in a case where 0 is set at a value of an element of the corresponding input vector). In detail, the information processing apparatus 100 calculates a partial differential value regarding the characteristic amount set for which the degree of contribution is to be calculated, of the error function in each piece of input data included in a plurality of pieces of input data, as the output difference. Then, the information processing apparatus 100 calculates an average of the above-described partial differential values calculated for a plurality of pieces of input data as the degree of contribution of the characteristic amount set. The error function may be, for example, a cross entropy error.

For example, if the error function of the data sample is defined as $L(x_i, y_i, w)$, the partial differential value of a non-zero element (which is assumed as the j-th dimension) corresponding to the characteristic amount included in the characteristic amount set for which the degree of contribution is to be calculated, is expressed as in the following expression.

$$\frac{d}{dx_{ij}} L(x_i, y_i, w)$$

(9)

The information processing apparatus 100 calculates the partial differential value indicated in the above-described expression (9) as the output difference of the characteristic amount set for which the degree of contribution is to be calculated. According to the second contribution degree calculation method, by approximately calculating the output difference, it is possible to reduce a calculation amount compared to the first contribution degree calculation method. Note that, if the partial differential value is positive, the prediction probability tends to be lower if 0 is set at a non-zero dimension. That is, the characteristic amount set for which the partial differential value is positive, positively contributes to prediction. Meanwhile, if the partial differential value is negative, the prediction probability tends to be greater if 0 is set at a non-zero dimension. That is, the characteristic amount set for which the partial differential is negative, negatively contributes to prediction.

The information processing apparatus 100 may calculate a second-order differential indicated in the following expression, and may calculate an approximate value of the output difference in a case where 0 is set at a non-zero dimension by performing second-order approximation (for example, approximation using a function to a squared term of Taylor expansion).

$$\frac{d^2}{dx_{ij}{}^2} L(x_i, y_i, w)$$

(10)

It is possible to improve approximation accuracy by second-order approximation using a second-order differential. Note that the information processing apparatus 100 may calculate the degree of contribution by employing the first contribution degree calculation method only for a dimension for which value of a first-order differential is great. By this means, compared to a case where the first contribution degree calculation method is employed for all characteristic amounts, it is possible to reduce a calculation amount.

(3) Third contribution degree calculation method

The third contribution degree calculation method is a method in which degrees of contribution are calculated using the above-described first contribution degree calculation method using a plurality of prediction models, and a final degree of contribution is obtained by averaging these degrees of contribution. In detail, the information processing apparatus 100 calculates change values from a prediction result obtained by inputting each piece of input data included in a plurality of pieces of input data to the prediction model, to a prediction result obtained by excluding a characteristic amount set for which the degree of contribution is to be calculated, from the input data. The information processing apparatus 100 calculates change values using a plurality of prediction models, and calculates an average of the change values in the plurality of prediction models as the degree of contribution of the characteristic amount set. The plurality of prediction models are generated, for example, by learning a prediction model a plurality of times while changing learning data or a learning method. While the prediction model, eventually, the output difference can change in accordance with the learning data or the learning method, according to the third contribution degree calculation method, it is possible to reduce dependence of the calculated degree of contribution on the learning data.

<3.5. Characteristic amount set extraction processing>

The information processing apparatus 100 (for example, the extraction unit 145) extracts (that is, generates) the characteristic amount set from the characteristic amounts included in a plurality of pieces of input data input to the prediction model configured by a non-linear model. Here, the extracted characteristic amount set is a set including a plurality of characteristic amounts which largely contributes to prediction, that is, create a synergy effect, by being combined among a plurality of characteristic amounts which can be included in one characteristic amount vector. A characteristic amount set which includes one or more characteristic amounts from which an arbitrary one characteristic amount is excluded from the extracted characteristic amount set which is set as a first characteristic amount set, is set as a second characteristic amount set. An absolute value of the degree of contribution to a prediction result by the prediction model of the first characteristic amount set is equal to or greater than a first threshold, and the degree of contribution to a prediction result by the prediction model of the second characteristic amount set is equal to or less than a second threshold. For example, it is assumed that combination of a characteristic amount of an age item of "male", and a characteristic amount of a residential prefecture item of "Tokyo" creates a synergy effect in a direction which improves a purchase probability. In this case, a high purchase probability is output from the prediction model for a characteristic amount vector having both of these characteristic amounts (that is, in which corresponding dimensions are non-zero). Meanwhile, a low purchase probability is output from the prediction model for a characteristic amount vector having only one of these characteristic amounts. In other words, the degree of contribution of combination of the characteristic amount of an age item of "male" and the characteristic amount of a residential prefecture item of "Tokyo" to the prediction result is high, while a degree of contribution of each characteristic amount to the prediction result is low. Therefore, the information processing apparatus 100 extracts a characteristic amount set by collecting characteristic amounts which satisfy the above-described conditions regarding the above-described first threshold and second threshold. For example, the information processing apparatus 100 extracts a characteristic amount set by performing the above-described calculation of the degree of contribution and comparison with the first threshold and the second threshold for assumed all characteristic amount sets. By this means, it is possible to extract a characteristic amount set including a plurality of characteristic amounts, which creates a synergy effect.

The first threshold is greater than the second threshold. The first threshold and the second threshold are calculated on the basis of the customer information and the prediction model. For example, the information processing apparatus 100 calculates degrees of contribution of all the characteristic amounts, sets a degree of contribution at the top 5% as the first threshold, and sets a degree of contribution at the top 50% as the second threshold. By setting the thresholds in this manner, it is possible to adjust a level of a synergy effect of combination of characteristic amounts to be extracted.

As described above, because the number of types of combination of characteristic amounts is affected by so-called curse of dimensionality, that is, increases at a rate proportional to a power of the number of characteristic amounts, there is a case where it is difficult to confirm whether or not there is a synergy effect for combination of all characteristic amounts in terms of a calculation amount.

Therefore, the information processing apparatus 100 extracts a characteristic amount set on the basis of dispersion of the output differences calculated when the degree of contribution is calculated. For example, the information processing apparatus 100 extracts a characteristic amount set by collecting characteristic amounts for which an absolute value of an average of the output differences (that is, the degree of contribution) is equal to or greater than a third threshold, and dispersion of the output differences is equal to or greater than a fourth threshold. The third threshold and the fourth threshold can be arbitrarily set. An example will be assumed again where combination of the characteristic amount of an age item of "male" and the characteristic amount of a residential prefecture item of "Tokyo" described above creates a synergy effect in a direction which improves a purchase probability. In this case, an output difference $C_{iS(male)}$ for the characteristic amount set S (male) having only "male" becomes a great value for the input data including "Tokyo", while the output difference $C_{iS(male)}$ becomes a small value for input data which does not include "Tokyo". Therefore, dispersion of the output difference $C_{iS(male)}$ in a plurality of pieces of input data becomes great. Meanwhile, concerning the characteristic amount which contributes to prediction by the prediction model without depending on other characteristic amounts, because the output difference Cis becomes great for any input data, dispersion becomes small. The information processing apparatus 100 may confirm a synergy effect using the above-described first threshold and second threshold for the characteristic amount set extracted on the basis of the average and dispersion of the output differences. Because the information processing apparatus 100 can extract a characteristic amount set which contributes to prediction while narrowing down to characteristic amounts whose dispersion of output differences is great, compared to a case where a synergy effect is confirmed using the above-described first threshold and second threshold for combination of all characteristic amounts, it is possible to reduce a calculation amount.

Specific extraction processing of the characteristic amount set will be described. The information processing apparatus 100 calculates an absolute value of an average, and dispersion of output differences for each of characteristic amount sets including one or more characteristic amounts. Then, the information processing apparatus 100 gradually extracts the characteristic amount set by forming a sum set by collecting characteristic amounts whose absolute value of the average of output differences is great (that is, equal to or greater than the third threshold) and whose dispersion is great (that is, equal to or greater than the fourth threshold). In this event, the information processing apparatus 100 may extract a characteristic amount set by collecting characteristic amounts on the basis of a frequency of the characteristic amounts commonly appearing in the input data. For example, the information processing apparatus 100 extracts a characteristic amount set to which a characteristic amount whose frequency of appearing in common with the characteristic amount set whose absolute value of an average of output differences is great and whose dispersion is great (in other words, for which the number of pieces of input data is large) is added. By this means, it is possible to broaden a coverage of the characteristic amount set in the input data. Thereafter, the information processing apparatus 100 calculates an absolute value of an average and dispersion of the degrees of contribution for the newly extracted characteristic amount set. The information processing apparatus 100 performs such addition of a new characteristic amount to the characteristic amount set until the dispersion of output differences converges to a small value (that is, less than the fourth threshold). Then, the information processing apparatus 100 judges that the characteristic amount set contributes to prediction alone for the characteristic amount set whose absolute value of an average of output differences is great and dispersion is small, and sets the characteristic amount set and the degree of contribution of the characteristic amount set (that is, an average of output differences) as reasons of prediction.

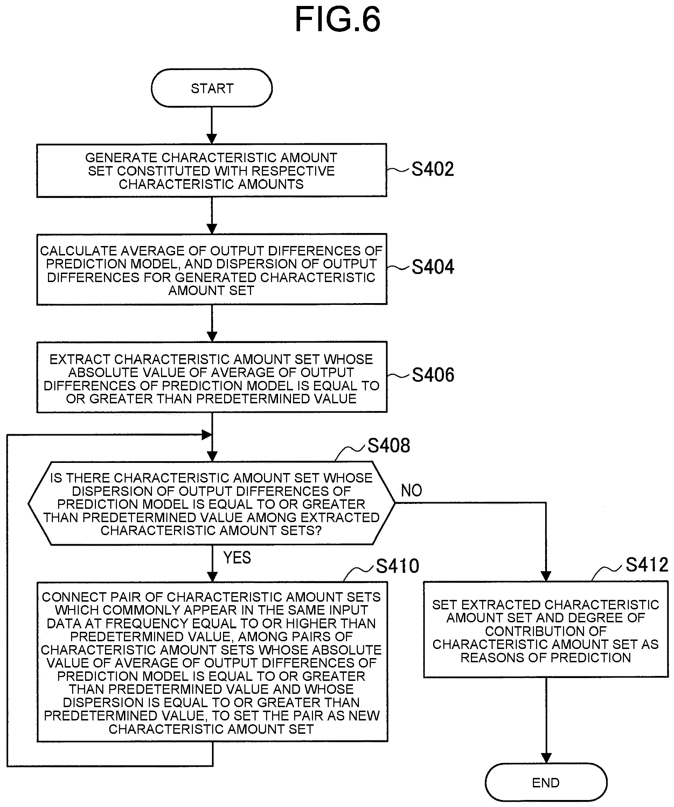

An example of flow of characteristic amount set extraction processing will be described below with reference to FIG. 6.

FIG. 6 is a flowchart illustrating an example of flow of characteristic amount set extraction processing to be executed by the information processing apparatus 100 according to the embodiment. As illustrated in FIG. 6, the extraction unit 145 generates a characteristic amount set constituted with respective characteristic amounts (step S402). The characteristic amount set generated here includes one of characteristic amounts which can be included in the input data. Then, the extraction unit 145 calculates an average of output differences of the prediction model, and dispersion of the output differences for the generated characteristic amount set (step S404). Then, the extraction unit 145 extracts a characteristic amount set whose absolute value of an average of output differences of the prediction model is equal to or greater than a predetermined value (that is, the third threshold) (step S406). Then, the extraction unit 145 determines whether or not there is a characteristic amount set whose dispersion of the output differences of the prediction model is equal to or greater than a predetermined value (that is, the fourth threshold) among the extracted characteristic amount sets (step S408). In a case where it is determined that there is a characteristic amount set whose dispersion of the output differences of the prediction model is equal to or greater than the predetermined value (step S408: YES), the processing proceeds to step S410. In detail, the extraction unit 145 connects a pair of characteristic amount sets which commonly appear in the same input data at a frequency equal to or higher than a predetermined value, among pairs of characteristic amount sets whose absolute value of an average of the output differences of the prediction model is equal to or greater than the predetermined value and whose dispersion is equal to or greater than the predetermined value, to set the pair as a new characteristic amount set (step S410). Thereafter, the processing returns to step S408. In a case where it is determined that there is no characteristic amount set whose dispersion of the output differences of the prediction model is equal to or greater than the predetermined value (step S408: NO), the processing proceeds to step S412. In detail, the extraction unit 145 sets the extracted characteristic amount set and the degree of contribution of the characteristic amount set (that is, an average of output differences) as reasons of prediction (step S412).

<3.6. Display control processing>

The information processing apparatus 100 (for example, the generation unit 147) generates output information and outputs the output information from the output unit 120. The information processing apparatus 100 performs the above-described extraction processing of the characteristic amount set and calculation processing of the degree of contribution on the basis of customer information of a plurality of customers, to generate the output information.

The output information includes information indicating reasons of prediction. In detail, the output information includes information indicating the extracted characteristic amount set. In detail, the output information includes information indicating that a plurality of characteristic amounts included in the extracted characteristic amount set contributes to a prediction result in association with each other. Further, the output information can include information indicating a degree of contribution of the extracted characteristic amount set. As a result of these kinds of information being included in the output information, the seller who refers to the output information can take appropriate measures for the customer.

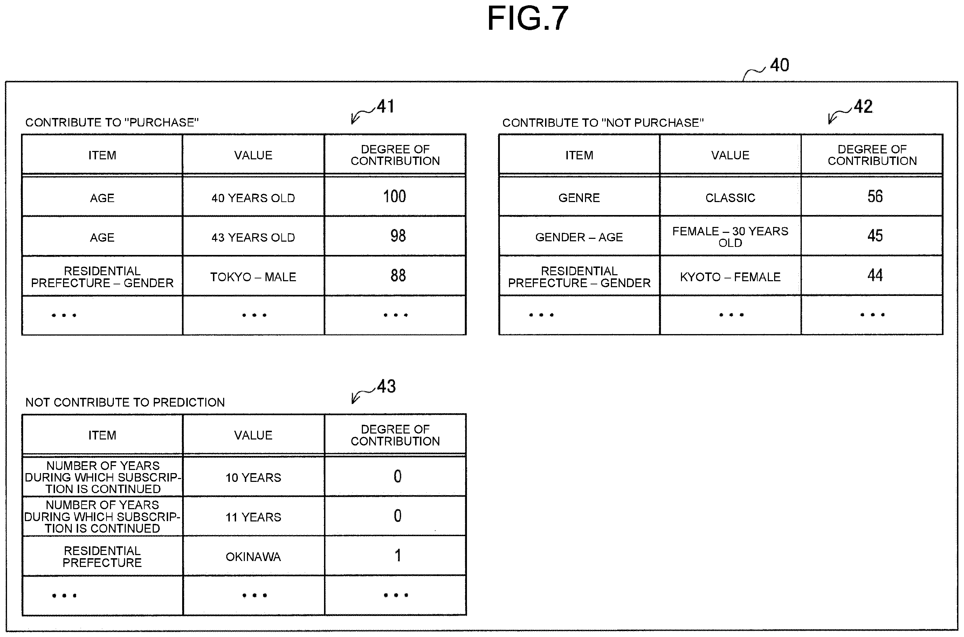

Hereinafter, as an example of the output information generated by the information processing apparatus 100, an example of a user interface (UI) generated as an image displayable on a display or the like will be described with reference to FIGS. 7 to 10.

• UI indicating basis of overall prediction

FIG. 7 is a diagram for describing an example of a UI according to the present embodiment. A UI 40 illustrated in FIG. 7 is output information indicating reasons of prediction for each characteristic amount set. The UI 40 includes UI elements 41, 42 and 43. In these UI elements, an "item" indicates an item of attribute information, a "value" indicates a characteristic amount set corresponding to each item, and a "contribution degree" indicates an absolute value of the degree of contribution of the characteristic amount set. Note that a value indicated in the "contribution degree" is normalized by dividing an absolute value of a target degree of contribution by an absolute value of the degree of contribution which is the greatest in the characteristic amount set.

In the UI element 41, the characteristic amount sets extracted as the characteristic amount sets which positively contribute to the prediction result, and absolute values of the degree of contributions of the characteristic amount sets are listed in descending order of the absolute value of the degree of contribution. In the example illustrated in FIG. 7, a characteristic amount indicating that age is 40 years old, a characteristic amount indicating that age is 43 years old, and combination of a characteristic amount of a residential prefecture and a characteristic amount of age being Tokyo and male, are listed as the characteristic amount set which positively contributes to the prediction result. Among these, combination of a residential prefecture and age being Tokyo and male corresponds to combination of characteristic amounts which creates a synergy effect.

In the UI element 42, the characteristic amount sets extracted as the characteristic amount sets which negatively contribute to a prediction result, and absolute values of degrees of contribution of the characteristic amount sets are listed in descending order of the absolute value of the degree of contribution. In the example illustrated in FIG. 7, a characteristic amount of genre of classic, combination of a characteristic amount of gender and a characteristic amount of age being female and 30 years old, and combination of a characteristic amount of a residential prefecture and a characteristic amount of gender being Kyoto and female, are listed as the characteristic amount set which negatively contributes to the prediction result. Among these, combination of a characteristic amount of genre and a characteristic amount of age being female and 30 years old, and combination of a characteristic amount of a residential prefecture and a characteristic amount of gender being Kyoto and female correspond to combination of characteristic amounts which creates a synergy effect.

In the UI element 43, the characteristic amount sets which are not extracted as the characteristic amount set which contributes to the prediction result, that is, the characteristic amount sets whose degrees of contribution to prediction are small, and absolute values of the degrees of contribution of the characteristic amount sets are listed in order of ascending order of the absolute value of the degree of contribution. In the example illustrated in FIG. 7, a characteristic amount of the number of years during which subscription is continued of 10 years, and a characteristic amount of the number of years during which subscription is continued of 11 years, and a characteristic amount of a residential prefecture of Okinawa are listed as the characteristic amount set which does not contribute to the prediction.

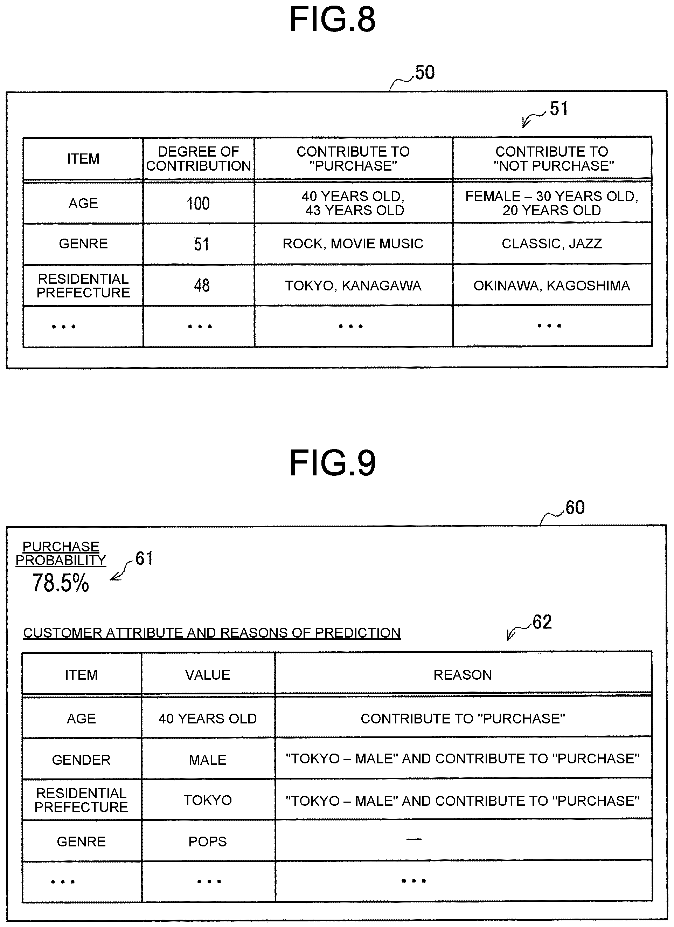

FIG. 8 is a diagram for describing an example of a UI according to the present embodiment. A UI 50 illustrated in FIG. 8 is output information indicating reasons of prediction for each item. The UI 50 includes a UI element 51. In the UI element 51, an "item" indicates an item of attribute information, a "contribution degree" indicates an absolute value of the degree of contribution of the characteristic amount set, "contribution to "purchase"" indicates a characteristic amount set which positively contributes, and "contribution to "not purchase"" indicates a characteristic amount set which negatively contributes. Note that a value indicated in the "contribution degree" is normalized by dividing an absolute value of a target degree of contribution by an absolute value of the degree of contribution which is the greatest in the characteristic amount set.

In the UI element 51, the characteristic amount sets extracted as the characteristic amount sets which contribute to the prediction result are listed for each item. In detail, in the UI element 51, the degree of contribution for each item, the characteristic amount set which includes the characteristic amount of the item and which positively contributes, and the characteristic amount set which negatively contributes are listed in descending order of the absolute value of the degree of contribution for each item. The degree of contribution for each item is an average of absolute values of degrees of contribution of the characteristic amount sets listed concerning a target item. In the example illustrated in FIG. 8, concerning an item of age, it is indicated that characteristic amounts of 40 years old and 43 years old positively contribute, and a characteristic amount set of a characteristic amount of female and a characteristic amount of 30 years old, and a characteristic amount of 20 years old negatively contribute. Further, concerning an item of genre, it is indicated that characteristic amounts of rock and movie music positively contribute, and characteristic amounts of classic and jazz negatively contribute. Further, concerning an item of a residential prefecture, it is indicated that characteristic amounts of Tokyo and Kanagawa positively contribute, and characteristic amounts of Okinawa and Kagoshima negatively contribute.

Through such UI 40 and UI 50, the seller can understand perspective with which the prediction model wholly performs prediction, so that the seller can gain a deeper intuitive understanding of a purchase probability, can gain insight concerning tendency of purchase by the customers, and can find problems of the prediction model.

• UI indicating individual basis of prediction for each customer

FIG. 9 is a diagram for describing an example of a UI according to the present embodiment. A UI 60 illustrated in FIG. 9 is output information including information indicating combination of characteristic amounts included in the extracted characteristic amount set among the characteristic amounts included in one piece of input data. The UI 60 includes UI elements 61 and 62. The UI element 61 is a purchase probability of a music player, obtained by inputting attribute information of one customer who is a prediction target, to the prediction model. The UI element 62 includes information indicating reasons of prediction for each characteristic amount included in the attribute information of one target customer. In the UI element 62, an "item" indicates an item of attribute information, a "value" indicates a characteristic amount corresponding to each item, and a "reason" indicates a reason of prediction.

In the "reason", as reasons of prediction, information indicating whether or not the characteristic amount is extracted as the characteristic amount set which contributes to prediction, is indicated. "-" is indicated for a characteristic amount which is not extracted at the characteristic amount set which contributes to the prediction. In the example illustrated in FIG. 9, it is indicated that pops which is a characteristic amount of an item of genre does not contribute to the prediction. Meanwhile, concerning the characteristic amount extracted as the characteristic amount set which contributes to the prediction, information indicating whether the characteristic amount set contributes positively or negatively is indicated. Specifically, "contribute to "purchase"" is indicated for the characteristic amount which positively contributes, while "contribute to "not purchase"" is indicated for the characteristic amount which negatively contributes. Further, concerning the characteristic amount extracted as the characteristic amount set which contributes to the prediction, information indicating whether the characteristic amount is extracted as the characteristic amount set constituted with the characteristic amount alone, or extracted as the characteristic amount set including other characteristic amounts, is indicated. Particularly, in the latter case, information indicating other characteristic amounts to be combined is indicated. In the example illustrated in FIG. 9, it is indicated that a characteristic amount of an item of age of 40 years old positively contributes alone. Further, it is indicated that a characteristic amount of an item of gender of male positively contributes by being combined with a characteristic amount of a residential prefecture of Tokyo. Further, it is indicated that a characteristic amount of a residential prefecture of Tokyo positively contributes by being combined with a characteristic amount of an item of gender of male.

With such a UI 60, the seller can understand perspective with which the prediction model performs prediction for one customer, can gain a deeper intuitive understanding of a purchase probability, can gain insight concerning tendency of purchase by the customer, and can find problems of the prediction model.

• Case where there is deficit in attribute information of customer

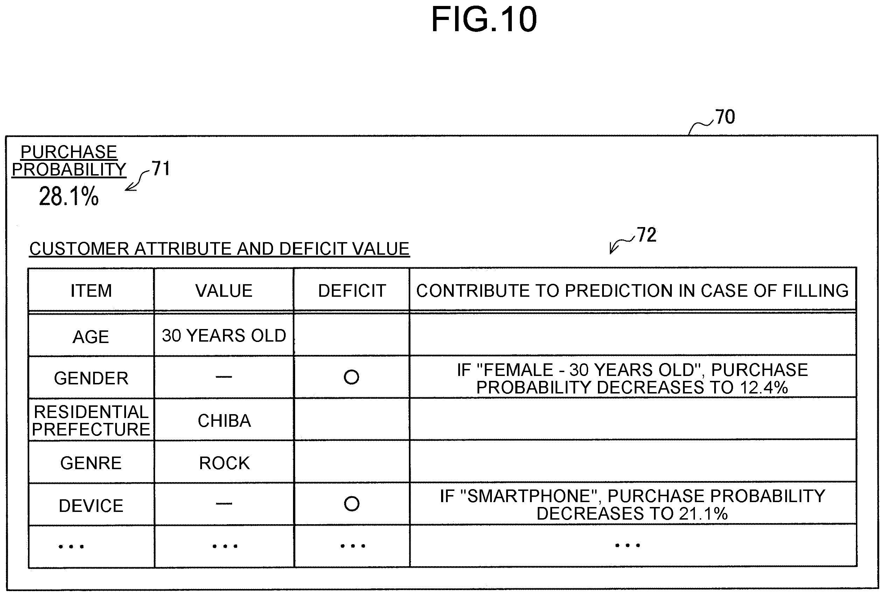

FIG. 10 is a diagram for describing an example of a UI according to the present embodiment. A UI 70 illustrated in FIG. 10 is output information including a deficit portion included in one piece of input data and information indicating change of a prediction result in a case where the deficit portion is filled with a specific characteristic amount. The UI 70 includes UI elements 71 and 72. The UI element 71 is a purchase probability of a music player, obtained by inputting attribute information of one customer who is a prediction target, to the prediction model. In the UI element 72, an "item" indicates an item of attribute information, a "value" indicates a characteristic amount of each item, a "deficit" indicates whether or not there is a deficit, and "contribute to prediction in a case of filling" indicates how the purchase probability changes in a case where the deficit portion is filled with a characteristic amount. For example, in the example illustrated in FIG. 10, there is a deficit in an item of gender, and it is indicated that, if a characteristic amount of an item of gender is female, the purchase probability decreases to 12.4%. There is a deficit in an item of a device, and it is indicated that, if a characteristic amount of an item of a device is a smartphone, the purchase probability decreases to 21.1%. This purchase probability is a purchase probability obtained by inputting attribute information which fills the deficit portion to the prediction model. Put more simply, such a purchase probability may be calculated by adding a degree of contribution of the characteristic amount which fills the deficit portion, to the purchase probability indicated in the UI element 71.

Here, the above-described specific characteristic amount is a characteristic amount which can fill the deficit portion, and which is included in the characteristic amount set whose absolute value of the degree of contribution is the greatest among the characteristic amount sets which can be included in the input data. The characteristic amount which fills the deficit portion may be a characteristic amount which contributes alone, or may be a characteristic amount which contributes by being combined with other characteristic amounts. In the latter case, information indicating other characteristic amounts which contribute by being combined is indicated in "contribute to prediction in a case of filling". Further, both in a case where the characteristic amount which fills the deficit portion contributes alone and in a case where there is a plurality of other characteristic amounts which contributes by being combined, the deficit portion is filled with the characteristic amount whose absolute value of the degree of contribution is the greatest among these. In the example illustrated in FIG. 10, there is a deficit in an item of gender, and it is indicated that, if a characteristic amount of an item of gender is female, by the characteristic amount being combined with a characteristic amount of age of 30 years old, the purchase probability decreases to 12.4%.

With such a UI 60, for example, the seller can efficiently fill deficit portions by sequentially asking for the deficit portions from a deficit portion which can largely change the purchase probability when the seller asks for and fills characteristic amounts in the deficit portions while having a conversation with the customer.

<<4. Modification>>

<4.1. First Modification>

The present modified example is an example where the input data is clustered, and information is presented for each cluster.

(1) Clustering and extraction of representative characteristic amount set

The information processing apparatus 100 (for example, the extraction unit 145) clusters a plurality of pieces of input data on the basis of a contribution degree vector for each piece of input data which connects degrees of contribution of one or more characteristic amounts included in the input data, and extracts a characteristic amount set which characterizes a cluster obtained as a result of clustering as a representative characteristic amount set of the cluster. In more details, first, the information processing apparatus 100 clusters input data whose degrees of contribution of the characteristic amounts for the prediction result by the prediction model are similar. Then, the information processing apparatus 100 extracts a representative characteristic amount set for each cluster. The representative characteristic amount set is a common characteristic amount of the input data of the cluster. The first user can easily understand overall tendency of prediction as the cluster and characteristics of the cluster, for example, can grasp a characteristic amount common to a plurality of users for whom similar prediction is performed, by referring to the representative characteristic amount set. For example, the seller can grasp a characteristic amount which is common to users who are highly likely to purchase/not to purchase a music player, and can utilize the characteristic amount in business operation. Clustering and extraction of the representative characteristic amount set will be described in detail below.

First, the information processing apparatus 100 calculates an output difference $b_i$ of the prediction model, of the input data input to the prediction model. The output difference $b_i$ is expressed with the following expression.

$$b_i = \{b_{i1}, b_{i2}, b_{id}\}$$

(11)

Here, $_{ij}$ is the degree of contribution $c_{ij}$ of the j-th characteristic amount of the input data i. Further, d is the number of dimensions of the characteristic amount. That is, an output difference vector $b_i$ corresponds to a contribution degree vector obtained by connecting the degrees of contribution $c_{ij}$ of one or more characteristic amounts included in the input data i.

Then, the information processing apparatus 100 performs clustering on the input data on the basis of the output difference vector $b_i$. As the clustering, an arbitrary method such as a Ward method and k-means can be used. The number of clusters may be determined in advance or may be arbitrarily set in process of the clustering.

Then, the information processing apparatus 100 calculates a centroid of each cluster. The centroid is an average vector of the output difference vector $b_i$ of the input data belonging to the cluster. That is, a centroid $B_k$ of a cluster k is calculated with the following expression.

$$B_k = \frac{1}{Sizeof(k)} \sum_{i \in k} b_i$$

(12)

Here, Sizeof(K) is the number of pieces of input data included in the cluster k.

Then, the information processing apparatus 100 extracts characteristic amounts of a predetermined number for a value of each dimension $B_{kj}$ (where j = 1, ..., d) of the centroid $B_k$ of the cluster k in descending order of the absolute value, and sets the extracted characteristic amounts of the predetermined number as a representative characteristic amount set of the cluster k.

Note that clustering and extraction of a representative characteristic amount set can be performed for each prediction label. For example, clustering and extraction of a representative characteristic amount set are performed for a prediction result of each of "purchase" and "not purchase". In this case, it becomes possible to grasp a characteristic amount which is common to users who are highly likely to purchase/not to purchase a music player and utilize the characteristic amount in business operation.

(2) Presentation of information regarding representative characteristic amount set

The information processing apparatus 100 (for example, the generation unit 147) may generate output information including information in which a cluster is associated with information regarding a representative characteristic amount set of the cluster, and may output the output information from the output unit 120. Examples of the information regarding the representative characteristic amount set of the cluster can include information indicating each of characteristic amounts included in the representative characteristic amount set, a cluster type, or the like. In any case, it becomes possible to present detailed information regarding the representative characteristic amount set.

- Presentation of information indicating each of characteristic amounts included in representative characteristic amount set

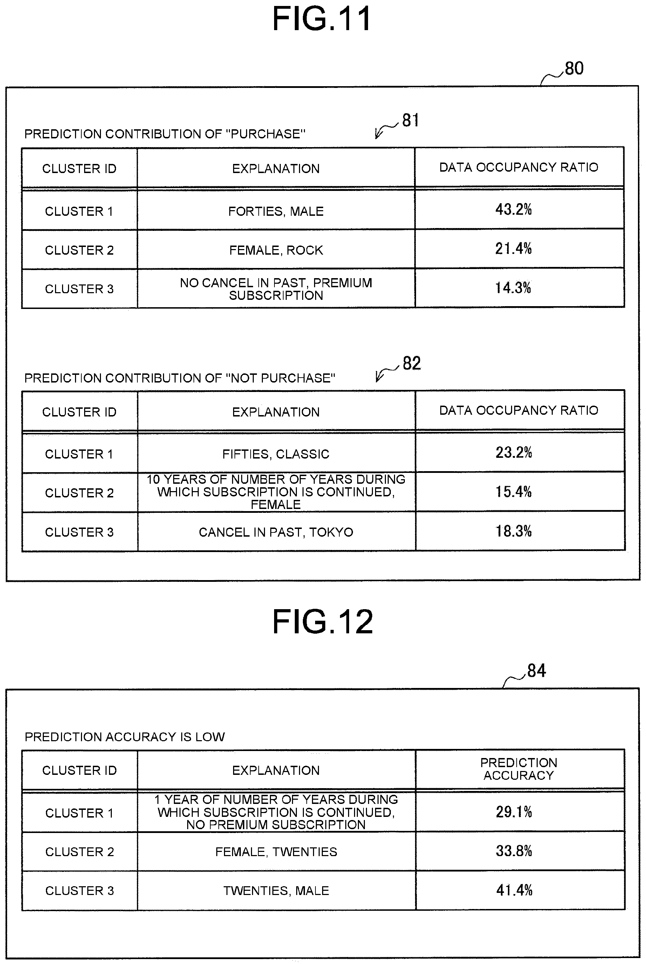

The output information may include information indicating each of characteristic amounts included in the representative characteristic amount set. An example of the output information will be described below with reference to FIG. 11.

FIG. 11 is a diagram for describing an example of a UI according to the present modification. A UI 80 illustrated in FIG. 11 is an example of the output information including information indicating each of the characteristic amounts included in the representative characteristic amount set of the cluster. The UI 80 includes UI elements 81 and 82. In a field of "cluster ID", identification information of the cluster is presented. In a field of "explanation", information indicating each of the characteristic amounts included in the representative characteristic amount set of the cluster is presented. In a field of "data occupancy ratio", information indicating a data occupancy ratio which will be described later is presented.

In the UI element 81, information regarding the representative characteristic amount set for each cluster regarding prediction of "purchase" is arranged in order of priority. In the UI element 81, identification information of the cluster, information indicating each of the characteristic amounts included in the representative characteristic amount set of the cluster, and a data occupancy ratio of "purchase" in the cluster are associated with one another.

Prioritization will be described in detail. First, the information processing apparatus 100 calculates an average of absolute values of centroids $B_{kj}$ (hereinafter, also referred to as a cluster contribution score) concerning characteristic amounts belonging to the representative characteristic amount set of each cluster. Then, the information processing apparatus 100 calculates the proportion (hereinafter, also referred to as a data occupancy ratio) of the input data having the representative characteristic amount set, in the input data from which predetermined prediction results can be obtained among the input data belonging to each cluster. For example, the information processing apparatus 100 calculates a value obtained by dividing the number of pieces of input data predicted as "purchase" among the input data belonging to the cluster k by the total number of pieces of the input data belonging to the cluster k, as a data occupancy ratio of "purchase" in the cluster k. Then, the information processing apparatus 100 calculates a product of the data occupancy ratio of each cluster and the cluster contribution score (hereinafter, also referred to as a priority score). Then, the information processing apparatus 100 generates output information in which information regarding the representative characteristic amount set for each cluster is arranged in descending order of the priority score.

In the UI element 82, information regarding the representative characteristic amount set for each cluster regarding prediction of "not purchase" is arranged in order of priority. In the UI element 82, identification information of the cluster, information indicating each of the characteristic amounts included in the representative characteristic amount set of the cluster, and a data occupancy ratio of "not purchase" in the cluster are associated with one another.

By such a UI 80 being presented, the seller can grasp a characteristic amount which is common to customers who are highly likely to purchase/not to purchase a music player, and for which a degree of contribution to the prediction result and a data occupancy ratio are high. That is, it becomes possible to suggest many customers having a characteristic amount which involves a high probability of purchasing/not purchasing a music player, that is, many customers to whom business operation should be performed, so that it is possible to support business operation more appropriately.

- Presentation of cluster type

The output information may include a cluster type. The cluster type is information indicating a type of the representative characteristic amount set of the cluster. Examples of the cluster type can include an attribute type mainly including an attribute characteristic amount and a behavior type mainly including a behavior characteristic amount. The attribute characteristic amount is a characteristic amount indicating an attribute, and, for example, age, gender, or the like, of the customer. The behavior characteristic amount is a characteristic amount indicating behavior, and, for example, is managed in association with the customer and behavior time in a database as indicated in the following Table 1. Table 1 includes information in which identification information of the customer (customer ID), information indicating behavior of the customer (behavior ID), and time at which the customer performs behavior, are associated.

Table 1. Example of content of database in which behavior data is stored

| Customer ID | Behavior ID | Time |
|---|---|---|
| A | Login | 2018.1.3 9:21 |
| A | Cancellation | 2018.8.9 10:01 |
| B | Premium subscription | 2018.8.3 14:29 |
| ... | ... | ... |

By the cluster type being presented, the seller can understand the cluster more deeply, and thereby can perform business operation more appropriately. For example, if the attribute type is the cluster of "not purchase", the seller can take measures by sending out questionnaires to the customer having the attribute characteristic amount belonging to the representative characteristic amount set of the cluster, and surveying reasons not to purchase a music player. Further, if the behavior type is the cluster of "purchase", the seller can increase purchasing quantities by taking measures for increasing behavior corresponding to the behavior characteristic amount belonging to the representative characteristic amount set of the cluster.

The information processing apparatus 100 may automatically generate an advice sentence regarding recommended action on the basis of the representative characteristic amount set and the cluster type of the cluster. For example, a case is assumed where the representative characteristic amount set of the cluster is an attribute type including attribute characteristic amounts of "fifties" and "classic", and the purchase probability is low. In this case, the information processing apparatus 100 generates an advice sentence such that "this type has a tendency "not to purchase". If it is possible to address reasons for "not purchasing" of this type, there is a possibility that "purchasing" increases".

(3) Presentation of prediction accuracy for cluster

The information processing apparatus 100 (for example, the generation unit 147) may generate output information including information in which the cluster is associated with prediction accuracy of the prediction model for the cluster, and may output the output information from the output unit 120. For example, the output information includes information in which the cluster is associated with information indicating prediction accuracy of the input data belonging to the cluster. The prediction accuracy is calculated by comparing a prediction result by the prediction model with actual behavior. An example of the output information will be described below with reference to FIG. 12.

FIG. 12 is a diagram for describing an example of a UI according to the present modification. A UI 84 illustrated in FIG. 12 is an example of output information including information indicating prediction accuracy of the cluster. In a field of "cluster ID", identification information of the cluster is presented. In a field of "explanation", information indicating each of the characteristic amounts included in the representative characteristic amount set of the cluster is presented. In a field of "prediction accuracy", information indicating prediction accuracy for the cluster is presented. In UI 84, these kinds of information are arranged for each cluster and in ascending order of the prediction accuracy.

The information processing apparatus 100 may generate an advice sentence for providing a clue to be used by the seller to obtain idea for improving prediction accuracy and may present the advice sentence to the seller along with the UI 84. Examples of the advice sentence can include, for example, "these are characteristics of input data from which prediction cannot be performed with high accuracy among the input data. The prediction accuracy will be improved by newly adding information relating to purchasing/not purchasing to these kinds of input data", or the like. Because it can be known from the "cluster 1" of the UI 84 that the prediction accuracy of customers immediately after subscription (the number of years during which subscription is continued is one year) is low, it is possible to suggest to the seller, a clue such that, if information of reasons for subscription can be acquired and added to input, there is a possibility that the prediction accuracy is improved.

<4.2. Second Modification>

The present modified example is an example where a topic model is utilized in place of clustering in the first modified example.

The topic model is a probability model to be used in document classification mainly in natural language processing, and is a model which estimates a probability that a sentence (for example, a word) in a predetermined unit, called topic appears within a document. The topic model is described in detail in, for example, Latent Dirichlet Allocation (Blei, David M.; Ng, Andrew Y.; Jordan, Michael I (January 2003). Lafferty, John, ed. "Latent Dirichlet Allocation". Journal of Machine Learning Research. 3). In the present modified example, the topic is polynomial distribution of the characteristic amounts in the input data, and the input data is constituted with mixture of topics.

The information processing apparatus 100 (for example, the extraction unit 145) converts the output difference vector bi into a frequency vector by taking an absolute value of each dimension of the output difference vector bi, performing constant multiplication, and rounding the value to a natural number. This converted frequency vector becomes input to the topic model. The number of topics is preferably determined in advance.

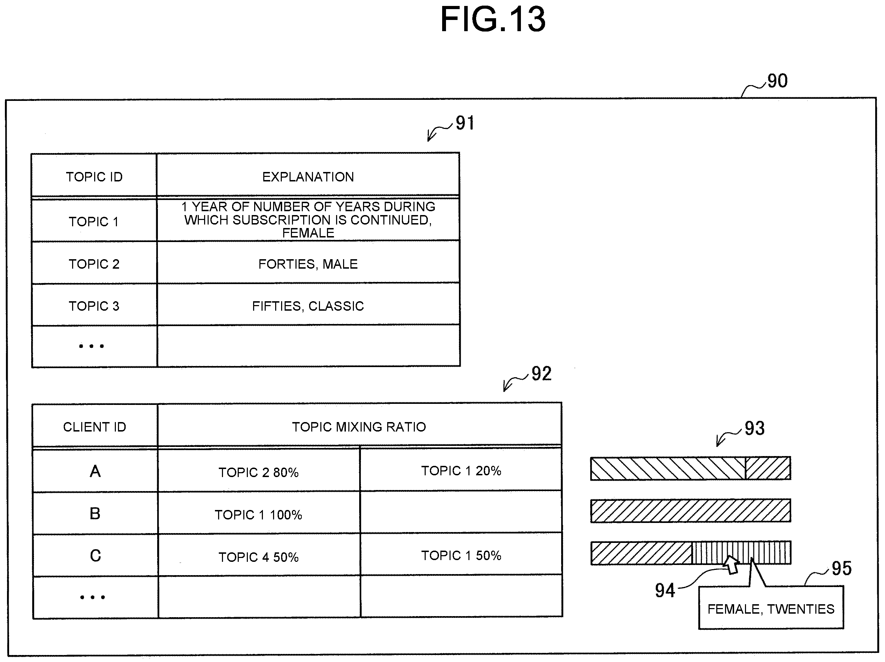

The information processing apparatus 100 (for example, the learning unit 143) learns the topic model in advance. By this means, polynomial distribution corresponding to each topic and a mixing ratio of topics in each piece of input data can be obtained. The information processing apparatus 100 (for example, the extraction unit 145) extracts characteristic amounts of a predetermined number for which probabilities in polynomial distribution of each topic are high as the representative characteristic amount set. The information processing apparatus 100 (for example, the generation unit 147) can generate the output information including the information regarding the representative characteristic amount set in a similar manner to presentation of information based on the clustering result described above. The output information can include a topic mixing ratio in the input data. An example of the output information will be described below with reference to FIG. 13.

FIG. 13 is a diagram for describing an example of a UI according to the present modification. A UI 90 illustrated in FIG. 13 is an example of the output information including information regarding the representative characteristic amount set extracted by utilizing the topic model. The UI 90 includes a UI element 91, a UI element 92 and a UI element 93.

In a field of "topic ID" in the UI element 91, identification information of the topic is presented. In a field of "explanation", information indicating each of the characteristic amounts included in the representative characteristic amount set of the topic is presented. In the UI element 91, these kinds of information are arranged for each topic in order of priority.

In a field of "customer ID" in the UI element 92, identification information of the customer is presented. In a field of a "topic mixing ratio", a topic mixing ratio of the input data is presented. In the UI element 92, these kinds of information are arranged for each piece of input data. In the UI element 93, a topic mixing ratio for each piece of input data is expressed with a bar chart, and if a mouse is hovered over the UI element 93 with a pointer 94, a UI element 95 indicating content of the topic is displayed.

There can be the following two types of a prediction method for each topic.

• First method

First, the information processing apparatus 100 assumes that each piece of input data belongs to a topic for which a mixing ratio is the highest. Then, the information processing apparatus 100 sets the prediction label and the prediction probability for the input data belonging to the topic as the prediction label and the prediction probability of the topic.

• Second method

The information processing apparatus 100 calculates a weighted mean of the prediction labels for topic mixing ratios of the respective pieces of input data. For example, a case is assumed where, assuming that there are five pieces of input data, and mixing ratios of a "topic 1" are (1.0, 0.1, 0.0, 0.1, 0.2), and labels are (purchase, purchase, not purchase, not purchase, not purchase). In this case, the purchase probability of the "topic 1" is calculated with the following expression using a weighted mean in which 1 is set at "purchase", and 0 is set at "not purchase".

$$\frac{(1 \times 1.0 + 1 \times 0.1 + 0 \times 0.0 + 0 \times 0.1 + 0 \times 0.2)}{5} = 0.22$$

(13)

<<5. Hardware Configuration Example>>

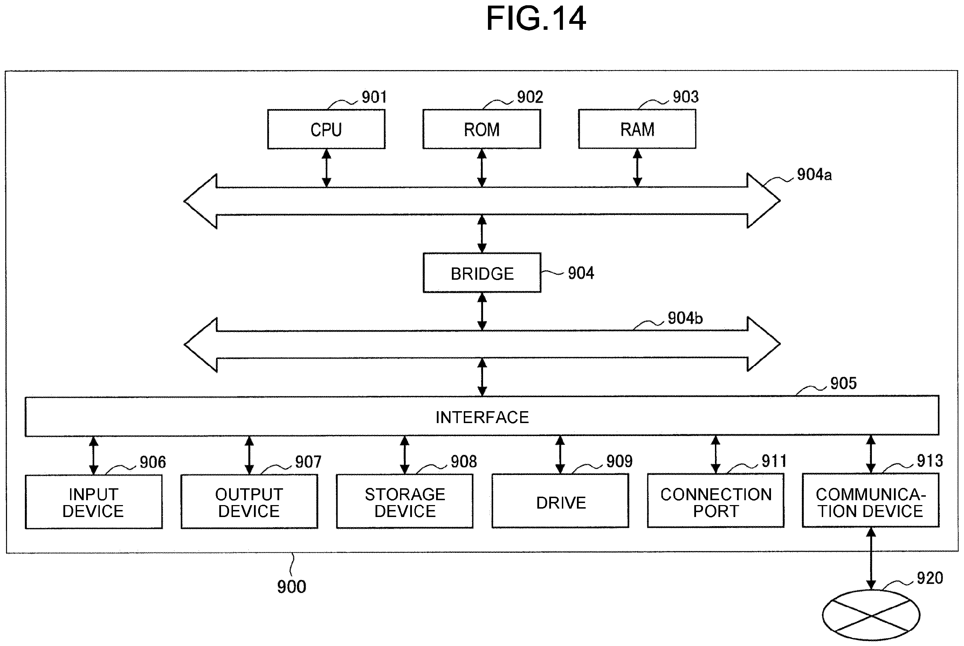

Finally, a hardware configuration of the information processing apparatus according to the present embodiment will be described with reference to FIG. 14. FIG. 14 is a block diagram illustrating an example of a hardware configuration of the information processing apparatus according to the present embodiment. Note that an information processing apparatus 900 illustrated in FIG. 14 can realize, for example, the information processing apparatus 100 illustrated in FIG. 2. The information processing by the information processing apparatus 100 according to the present embodiment is realized by cooperation of software and hardware described below.

As illustrated in FIG. 14, the information processing apparatus 900 includes a central processing unit (CPU) 901, a read only memory (ROM) 902, a random access memory (RAM) 903, and a host bus 904a. Furthermore, the information processing apparatus 900 includes a bridge 904, an external bus 904b, an interface 905, an input device 906, an output device 907, a storage device 908, a drive 909, a connection port 911, and a communication device 913. The information processing apparatus 900 may include a processing circuit such as an electric circuit, a DSP, or an ASIC instead of or in addition to the CPU 901.

The CPU 901 functions as an arithmetic processing device and a control device, and controls an overall operation in the information processing apparatus 900 according to various programs. Furthermore, the CPU 901 may be a microprocessor. The ROM 902 stores programs, operation parameters, and the like used by the CPU 901. The RAM 903 temporarily stores programs used in execution of the CPU 901, parameters that appropriately change in the execution, and the like. The CPU 901 can form, for example, the control unit 140 illustrated in FIG. 2. In the present embodiment, the CPU 901 performs the preprocessing for the input data, the learning of the prediction model, the extraction of the characteristic amount sets, the calculation of the degree of contribution to the characteristic amount sets, and the generation of the output information.

The CPU 901, the ROM 902, and the RAM 903 are mutually connected by the host bus 904a including a CPU bus and the like. The host bus 904a is connected to the external bus 904b such as a peripheral component interconnect/interface (PCI) bus via the bridge 904. Note that the host bus 904a, the bridge 904, and the external bus 904b do not necessarily need to be separately configured, and these functions may be implemented on one bus.

The input device 906 is realized by, for example, devices to which information is input by the user, such as a mouse, a keyboard, a touch panel, a button, a microphone, a switch, and a lever. Furthermore, the input device 906 may be, for example, a remote control device using infrared rays or other radio waves, or may be an external connection device such as a mobile phone or a PDA corresponding to the operation of the information processing apparatus 900. Moreover, the input device 906 may include, for example, an input control circuit that generates an input signal on the basis of the information input by the user using the above-described input means and outputs the input signal to the CPU 901, and the like. The user of the information processing apparatus 900 can input various data and give an instruction on processing operations to the information processing apparatus 900 by operating the input device 906. The input device 906 may form, for example, the input unit 110 illustrated in FIG. 2. In the present embodiment, the input device 906 receives the teacher data, inputs of the input data of the calculation targets of the extraction of the characteristic amount sets and the degree of contribution, and an input of the setting of the number of characteristic amount sets to be extracted, and the like.

The output device 907 is a device capable of visually or aurally notifying the user of acquired information. Such devices include display devices such as a CRT display device, a liquid crystal display device, a plasma display device, an EL display device, a laser projector, an LED projector, and a lamp, audio output devices such as a speaker and a headphone, a printer device, and the like. The output device 907 outputs, for example, results obtained by various types of processing performed by the information processing apparatus 900. Specifically, the display device visually displays the results obtained by the various types of processing performed by the information processing apparatus 900 in various formats such as texts, images, tables, and graphs. Meanwhile, the audio output device converts an audio signal including reproduced audio data, acoustic data, and the like into an analog signal and aurally outputs the analog signal. The output device 907 may form, for example, the output unit 120 illustrated in FIG. 2. In the present embodiment, the output device 907 outputs the output information.

The storage device 908 is a device for data storage formed as an example of a storage unit of the information processing apparatus 900. The storage device 908 is realized by, for example, a magnetic storage unit device such as an HDD, a semiconductor storage device, an optical storage device, a magneto-optical storage device, or the like. The storage device 908 may include a storage medium, a recording device that records data in the storage medium, a reading device that reads data from the storage medium, a deletion device that deletes data recorded in the storage medium, and the like. The storage device 908 stores programs executed by the CPU 901, various data, various data acquired from the outside, and the like. The storage device 908 may form, for example, the storage unit 130 illustrated in FIG. 2. In the present embodiment, the storage device 908 stores the learning data, the input data to be predicted, the learning result of the prediction model, the extraction result of the characteristic amount set, and the degree of contribution of the characteristic amount set.

The drive 909 is a reader/writer for a storage medium, and is built in or externally attached to the information processing apparatus 900. The drive 909 reads out information recorded in a removable storage medium such as mounted magnetic disk, optical disk, magneto-optical disk, or semiconductor memory, and outputs the information to the RAM 903. Furthermore, the drive 909 can also write information to the removable storage medium.

The connection port 911 is an interface connected to an external device, and is a connection port to an external device capable of transmitting data by a universal serial bus (USB) and the like, for example.

The communication device 913 is, for example, a communication interface including a communication device and the like for being connected to a network 920. The communication device 913 is, for example, a communication card for wired or wireless local area network (LAN), long term evolution (LTE), Bluetooth (registered trademark), wireless USB (WUSB), or the like. Furthermore, the communication device 913 may also be a router for optical communication, a router for asymmetric digital subscriber line (ADSL), a modem for various communications, or the like. The communication device 913 can transmit and receive signals and the like according to a predetermined protocol such as TCP/IP and the like, for example, with the Internet or other communication devices.

Note that the network 920 is a wired or wireless transmission path of information transmitted from a device connected to the network 920. For example, the network 920 may include the Internet, a public network such as a telephone network, a satellite communication network, various local area networks (LANs) including Ethernet (registered trademark), a wide area network (WAN), or the like. Furthermore, the network 920 may include a leased line network such as an internet protocol-virtual private network (IP-VPN).

As described above, an example of the hardware configuration capable of realizing the functions of the information processing apparatus 900 according to the present embodiment has been described. Each of the above-described configuration elements may be realized using a general-purpose member or may be realized by hardware specialized for the function of each configuration element. Therefore, the hardware configuration to be used can be changed as appropriate according to the technical level of the time of carrying out the present embodiment.

Note that a computer program for realizing each function of the information processing apparatus 900 according to the above-described present embodiment can be prepared and implemented on a PC or the like. Furthermore, a computer-readable recording medium in which such a computer program is stored can also be provided. The recording medium is, for example, a magnetic disk, an optical disk, a magneto-optical disk, a flash memory, or the like. Furthermore, the above computer program may be delivered via, for example, a network without using a recording medium.

<<6. Conclusion>>

An embodiment of the present disclosure has been described in detail above with reference to FIG. 1 to FIG. 14. As described above, the information processing apparatus 100 according to the present embodiment extracts a characteristic amount set which satisfies the following conditions among characteristic amounts included in a plurality of pieces of input data input to the prediction model configured by a non-linear model. A first condition is a condition that an absolute value of a degree of contribution of the extracted characteristic amount set, to a prediction result by the prediction model is equal to or greater than a first threshold. A second condition is a condition that an absolute value of a degree of contribution of a characteristic amount set obtained by excluding arbitrary one characteristic amount from the extracted characteristic amount set, to a prediction result by the prediction model is equal to or less than a second threshold. By extracting a characteristic amount set which satisfies such conditions, it is possible to extract the characteristic amount set including a plurality of characteristic amounts which creates a synergy effect, as reasons of prediction.

The information processing apparatus 100 calculates an average of change values from a prediction result obtained by inputting input data to the prediction model to a prediction result obtained by excluding a characteristic amount set for which a degree of contribution is to be calculated, from the input data, as the degree of contribution of the characteristic amount set. Meanwhile, the information processing apparatus 100 extracts a characteristic amount set which satisfies the above-described conditions on the basis of dispersion of such change values. Because the information processing apparatus 100 can extract a characteristic amount set which contributes to prediction while narrowing down characteristic amounts for which dispersion of the change values is great, it is possible to reduce a calculation amount compared to a case where whether or not the above-described conditions are satisfied is confirmed for combination of all the characteristic amounts.

As described above, the favorable embodiments of the present disclosure have been described in detail with reference to the accompanying drawings, but the technical scope of the present disclosure is not limited to such examples. It is obvious that persons having ordinary knowledge in the technical field of the present disclosure can conceive various changes and alterations within the scope of the technical idea described in the claims, and it is naturally understood that these changes and alterations belong to the technical scope of the present disclosure.

For example, while, in the above-described embodiment, processing of converting characteristic amounts of continuous values into a one-of-k vector has been described concerning preprocessing, it is also possible to handle the continuous values as is. For example, the information processing apparatus 100 may calculate standard deviation of the characteristic amounts of continuous values in advance, and may add or subtract a value of the standard deviation to or from the characteristic amounts of continuous values in place of processing of setting zero at non-zero elements of the one-of-k vector. In this case, meaning of the output difference of the prediction model is different between the categorical value and the continuous value. Therefore, the information processing apparatus 100 sets different values as thresholds in the characteristic amount set extraction processing (first to fourth thresholds) between the continuous value and the categorical value.

Furthermore, the processing described with reference to the flowcharts and sequence diagrams in the present specification do not necessarily need to be executed in the illustrated order. Some processing steps may be executed in parallel. Furthermore, additional processing steps may be adopted and some processing steps may be omitted.

Furthermore, the effects described in the present specification are merely illustrative or exemplary and are not restrictive. That is, the technology according to the present disclosure can exhibit other effects obvious to those skilled in the art from the description of the present specification in addition to or in place of the above-described effects.

Note that the following configuration also belong to the technical scope of the present disclosure.

(1) An information processing apparatus comprising: a control unit configured to extract a characteristic amount set from characteristic amounts included in a plurality of pieces of input data input to a prediction model configured by a non-linear model,
wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set to a prediction result by the prediction model is equal to or less than a second threshold.

(2) The information processing apparatus according to (1), wherein the first threshold is greater than the second threshold.

(3) The information processing apparatus according to (1) or (2), wherein the control unit calculates an average of change values from the prediction result obtained by inputting the input data to the prediction model to the prediction result obtained by excluding a characteristic amount set for which a degree of contribution is to be calculated, from the input data, as a degree of contribution of the characteristic amount set.

(4) The information processing apparatus according to (3), wherein the control unit calculates a partial differential value of an error function in the input data regarding the characteristic amount set for which the degree of contribution is to be calculated, as the change values.

(5) The information processing apparatus according to (3), wherein the control unit calculates an average of the change values in a plurality of the prediction models as the degree of contribution of the characteristic amount set.

(6) The information processing apparatus according to any one of (3) to (5), wherein the control unit extracts the characteristic amount set on a basis of dispersion of the change values.

(7) The information processing apparatus according to (6), wherein the control unit extracts the characteristic amount set by collecting characteristic amounts for which an absolute value of an average of the change values is equal to or greater than a third threshold, and dispersion of the change values is equal to or greater than a fourth threshold.

(8) The information processing apparatus according to (7), wherein the control unit extracts the characteristic amount set by collecting characteristic amounts on a basis of a frequency of the characteristic amounts commonly appearing in the input data.

(9) The information processing apparatus according to any one of (1) to (8), wherein the control unit generates output information including information indicating the extracted characteristic amount set.

(10) The information processing apparatus according to (9), wherein the output information includes information indicating a degree of contribution of the extracted characteristic amount set.

(11) The information processing apparatus according to (9) or (10), wherein the output information includes information indicating combination of characteristic amounts included in the extracted characteristic amount set among the characteristic amounts included in the input data.

(12) The information processing apparatus according to any one of (9) to (11), wherein the output information includes a deficit portion included in the input data and information indicating change of a prediction result in a case where the deficit portion is filled with a specific characteristic amount.

(13) The information processing apparatus according to (12), wherein the specific characteristic amount is a characteristic amount which can fill the deficit portion, and which is included in a characteristic amount set for which an absolute value of a degree of contribution is the greatest among characteristic amount sets which can be included in the input data.

(14) The information processing apparatus according to any one of (1) to (13), wherein the control unit clusters a plurality of pieces of the input data on a basis of a contribution degree vector for each piece of the input data, in which degrees of contribution of one or more characteristic amounts included in the input data are connected, and extracts a characteristic amount set which characterizes a cluster obtained as a result of clustering as a representative characteristic amount set of the cluster.

(15) The information processing apparatus according to (14), wherein the control unit generates output information including information in which the cluster is associated with information regarding the representative characteristic amount set of the cluster or prediction accuracy of the prediction model for the cluster.

(16) An information processing method comprising:

extracting by a processor, a characteristic amount set from characteristic amounts included in a plurality of pieces of input data input to a prediction model configured by a non-linear model,
wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set, to a prediction result by the prediction model is equal to or less than a second threshold.

(17) The information processing method according to (16), wherein the first threshold is greater than the second threshold.

(18) The information processing method according to (16) or (17), further comprising: calculating an average of change values from the prediction result obtained by inputting the input data to the prediction model to the prediction result obtained by excluding a characteristic amount set for which a degree of contribution is to be calculated, from the input data, as a degree of contribution of the characteristic amount set.

(19) The information processing method according to (18), wherein the extracting includes extracting the characteristic amount set on a basis of dispersion of the change values.

(20) A program for causing a computer to function as:

a control unit configured to extract a characteristic amount set from characteristic amounts included in a plurality of pieces of input data input to a prediction model configured by a non-linear model,
wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set, to a prediction result by the prediction model is equal to or less than a second threshold.

Reference Signs List

| 100 | Information processing apparatus |
| --- | --- |
| 110 | Input unit |
| 120 | Output unit |
| 130 | Storage unit |
| 140 | Control unit |
| 141 | Preprocessing unit |
| 143 | Learning unit |
| 145 | Extraction unit |
| 147 | Generation unit |

**Claims**

1.  An information processing apparatus comprising: a control unit configured to extract a characteristic amount set from characteristic amounts included in a plurality of pieces of input data input to a prediction model configured by a non-linear model,
    wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set to a prediction result by the prediction model is equal to or less than a second threshold.

2.  The information processing apparatus according to claim 1, wherein the first threshold is greater than the second threshold.

3.  The information processing apparatus according to claim 1, wherein the control unit calculates an average of change values from the prediction result obtained by inputting the input data to the prediction model to the prediction result obtained by excluding a characteristic amount set for which a degree of contribution is to be calculated, from the input data, as a degree of contribution of the characteristic amount set.

4.  The information processing apparatus according to claim 3, wherein the control unit calculates a partial differential value of an error function in the input data regarding the characteristic amount set for which the degree of contribution is to be calculated, as the change values.

**5.** The information processing apparatus according to claim 3, wherein the control unit calculates an average of the change values in a plurality of the prediction models as the degree of contribution of the characteristic amount set.

**6.** The information processing apparatus according to claim 3, wherein the control unit extracts the characteristic amount set on a basis of dispersion of the change values.

**7.** The information processing apparatus according to claim 6, wherein the control unit extracts the characteristic amount set by collecting characteristic amounts for which an absolute value of an average of the change values is equal to or greater than a third threshold, and dispersion of the change values is equal to or greater than a fourth threshold.

**8.** The information processing apparatus according to claim 7, wherein the control unit extracts the characteristic amount set by collecting characteristic amounts on a basis of a frequency of the characteristic amounts commonly appearing in the input data.

**9.** The information processing apparatus according to claim 1, wherein the control unit generates output information including information indicating the extracted characteristic amount set.

**10.** The information processing apparatus according to claim 9, wherein the output information includes information indicating a degree of contribution of the extracted characteristic amount set.

**11.** The information processing apparatus according to claim 9, wherein the output information includes information indicating combination of characteristic amounts included in the extracted characteristic amount set among the characteristic amounts included in the input data.

**12.** The information processing apparatus according to claim 9, wherein the output information includes a deficit portion included in the input data and information indicating change of a prediction result in a case where the deficit portion is filled with a specific characteristic amount.

**13.** The information processing apparatus according to claim 12, wherein the specific characteristic amount is a characteristic amount which can fill the deficit portion, and which is included in a characteristic amount set for which an absolute value of a degree of contribution is the greatest among characteristic amount sets which can be included in the input data.

**14.** The information processing apparatus according to claim 1, wherein the control unit clusters a plurality of pieces of the input data on a basis of a contribution degree vector for each piece of the input data, in which degrees of contribution of one or more characteristic amounts included in the input data are connected, and extracts a characteristic amount set which characterizes a cluster obtained as a result of clustering as a representative characteristic amount set of the cluster.

**15.** The information processing apparatus according to claim 14, wherein the control unit generates output information including information in which the cluster is associated with information regarding the representative characteristic amount set of the cluster or prediction accuracy of the prediction model for the cluster.

**16.** An information processing method comprising:

extracting by a processor, a characteristic amount set from characteristic amounts included in a plurality of pieces of input data input to a prediction model configured by a non-linear model,
wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set, to a prediction result by the prediction model is equal to or less than a second threshold.

**17.** The information processing method according to claim 16, wherein the first threshold is greater than the second threshold.

**18.** The information processing method according to claim 16, further comprising: calculating an average of change values from the prediction result obtained by inputting the input data to the prediction model to the prediction result obtained by excluding a characteristic amount set for which a degree of contribution is to be calculated, from the input data, as a degree of contribution of the characteristic amount set.

19. The information processing method according to claim 18, wherein the extracting includes extracting the characteristic amount set on a basis of dispersion of the change values.

20. A program for causing a computer to function as:

a control unit configured to extract a characteristic amount set from characteristic amounts included in a plurality of pieces of input data input to a prediction model configured by a non-linear model,
wherein an absolute value of a degree of contribution of the extracted characteristic amount set to a prediction result by the prediction model is equal to or greater than a first threshold, and an absolute value of a degree of contribution of a characteristic amount set obtained by excluding arbitrary one of the characteristic amounts from the extracted characteristic amount set, to a prediction result by the prediction model is equal to or less than a second threshold.

# FIG.1

10

20

INPUT DATA →　PREDICTION MODEL　→ OUTPUT DATA

30

# FIG.2

<br>

INPUT UNIT — 110

CONTROL UNIT — 140

PREPROCESS-ING UNIT — 141

LEARNING UNIT — 143

EXTRACTION UNIT — 145

GENERATION UNIT — 147

OUTPUT UNIT — 120

STORAGE UNIT — 130

100

# FIG.3

```
        ( START )
            │
            ▼
┌────────────────────────────────┐
│   TAKE OUT CHARACTERISTIC AMOUNT │  ~S102
│   p OF TARGET ITEM P AMONG ATTRIBUTE │
│   INFORMATION OF CUSTOMER        │
└────────────────────────────────┘
            │
            ▼
┌────────────────────────────────┐
│ ACQUIRE NATURAL NUMBER j ALLOCATED TO │
│ CHARACTERISTIC AMOUNT p WITH REFERENCE │  ~S104
│  TO DICTIONARY WHICH IS CREATED IN │
│   ADVANCE AND IN WHICH NATURAL NUMBERS │
│  FROM 1 ARE SEQUENTIALLY ALLOCATED TO │
│   k VALUES WHICH CAN BE TAKEN BY TARGET │
│            ITEM P               │
└────────────────────────────────┘
            │
            ▼
┌────────────────────────────────┐
│ GENERATE k-DIMENSIONAL VECTOR IN WHICH │  ~S106
│    1 IS SET AT j-TH DIMENSION AND │
│    0 IS SET AT OTHER DIMENSIONS  │
└────────────────────────────────┘
            │
            ▼
         ( END )
```

# FIG.4

```
        ( START )
            │
            ▼
┌────────────────────────────────┐
│  GENERATE one-of-k VECTORS FOR   │  ~S202
│  RESPECTIVE ITEMS OF ATTRIBUTE   │
│   INFORMATION OF CUSTOMER        │
└────────────────────────────────┘
            │
            ▼
┌────────────────────────────────┐
│  GENERATE CHARACTERISTIC AMOUNT  │  ~S204
│   VECTOR BY CONNECTING one-of-k  │
│  VECTORS OF RESPECTIVE ITEMS IN  │
│     PREDETERMINED ORDER          │
└────────────────────────────────┘
            │
            ▼
         ( END )
```

# FIG.5

START

GENERATE DATA SAMPLE ON BASIS OF
CUSTOMER INFORMATION OF EACH
CUSTOMER, AND SETS SET OF DATA
SAMPLES AS LEARNING DATA ~S302

LEARN PARAMETER OF PREDICTION
MODEL ON BASIS OF LEARNING DATA ~S304

END

# FIG.6

```
        ┌──────────┐
        │  START   │
        └────┬─────┘
             │
             ▼
┌───────────────────────────────┐
│ GENERATE CHARACTERISTIC AMOUNT │
│  SET CONSTITUTED WITH RESPECTIVE│─── S402
│   CHARACTERISTIC AMOUNTS        │
└───────────────┬───────────────┘
                │
                ▼
┌───────────────────────────────────┐
│ CALCULATE AVERAGE OF OUTPUT        │
│ DIFFERENCES OF PREDICTION MODEL,   │
│ AND DISPERSION OF OUTPUT           │─── S404
│ DIFFERENCES FOR GENERATED          │
│ CHARACTERISTIC AMOUNT SET          │
└───────────────┬───────────────────┘
                │
                ▼
┌───────────────────────────────────┐
│ EXTRACT CHARACTERISTIC AMOUNT SET  │
│ WHOSE ABSOLUTE VALUE OF AVERAGE    │
│ OF OUTPUT DIFFERENCES OF           │─── S406
│ PREDICTION MODEL IS EQUAL TO OR    │
│ GREATER THAN PREDETERMINED VALUE   │
└───────────────┬───────────────────┘
                │
                ▼
```

S408

IS THERE CHARACTERISTIC AMOUNT SET WHOSE DISPERSION OF OUTPUT DIFFERENCES OF PREDICTION MODEL IS EQUAL TO OR GREATER THAN PREDETERMINED VALUE AMONG EXTRACTED CHARACTERISTIC AMOUNT SETS? — NO

YES

S410

CONNECT PAIR OF CHARACTERISTIC AMOUNT SETS WHICH COMMONLY APPEAR IN THE SAME INPUT DATA AT FREQUENCY EQUAL TO OR HIGHER THAN PREDETERMINED VALUE, AMONG PAIRS OF CHARACTERISTIC AMOUNT SETS WHOSE ABSOLUTE VALUE OF AVERAGE OF OUTPUT DIFFERENCES OF PREDICTION MODEL IS EQUAL TO OR GREATER THAN PREDETERMINED VALUE AND WHOSE DISPERSION IS EQUAL TO OR GREATER THAN PREDETERMINED VALUE, TO SET THE PAIR AS NEW CHARACTERISTIC AMOUNT SET

S412

SET EXTRACTED CHARACTERISTIC AMOUNT SET AND DEGREE OF CONTRIBUTION OF CHARACTERISTIC AMOUNT SET AS REASONS OF PREDICTION

END

# FIG.7

40

CONTRIBUTE TO "PURCHASE"  41

| ITEM | VALUE | DEGREE OF CONTRIBUTION |
|---|---|---|
| AGE | 40 YEARS OLD | 100 |
| AGE | 43 YEARS OLD | 98 |
| RESIDENTIAL PREFECTURE – GENDER | TOKYO – MALE | 88 |
| . . . | . . . | . . . |

CONTRIBUTE TO "NOT PURCHASE"  42

| ITEM | VALUE | DEGREE OF CONTRIBUTION |
|---|---|---|
| GENRE | CLASSIC | 56 |
| GENDER – AGE | FEMALE – 30 YEARS OLD | 45 |
| RESIDENTIAL PREFECTURE – GENDER | KYOTO – FEMALE | 44 |
| . . . | . . . | . . . |

NOT CONTRIBUTE TO PREDICTION  43

| ITEM | VALUE | DEGREE OF CONTRIBUTION |
|---|---|---|
| NUMBER OF YEARS DURING WHICH SUBSCRIP-TION IS CONTINUED | 10 YEARS | 0 |
| NUMBER OF YEARS DURING WHICH SUBSCRIP-TION IS CONTINUED | 11 YEARS | 0 |
| RESIDENTIAL PREFECTURE | OKINAWA | 1 |
| . . . | . . . | . . . |

EP 3 742 356 A1

# FIG.8

~50

~51

| ITEM | DEGREE OF CONTRIBUTION | CONTRIBUTE TO "PURCHASE" | CONTRIBUTE TO "NOT PURCHASE" |
|---|---|---|---|
| AGE | 100 | 40 YEARS OLD, 43 YEARS OLD | FEMALE – 30 YEARS OLD, 20 YEARS OLD |
| GENRE | 51 | ROCK, MOVIE MUSIC | CLASSIC, JAZZ |
| RESIDENTIAL PREFECTURE | 48 | TOKYO, KANAGAWA | OKINAWA, KAGOSHIMA |
| . . . | . . . | . . . | . . . |

# FIG.9

~60

PURCHASE PROBABILITY ~61
## 78.5%

CUSTOMER ATTRIBUTE AND REASONS OF PREDICTION ~62

| ITEM | VALUE | REASON |
|---|---|---|
| AGE | 40 YEARS OLD | CONTRIBUTE TO "PURCHASE" |
| GENDER | MALE | "TOKYO – MALE" AND CONTRIBUTE TO "PURCHASE" |
| RESIDENTIAL PREFECTURE | TOKYO | "TOKYO – MALE" AND CONTRIBUTE TO "PURCHASE" |
| GENRE | POPS | — |
| . . . | . . . | . . . |

# FIG.10

EP 3 742 356 A1

**PURCHASE PROBABILITY** ～71

**28.1%**

CUSTOMER ATTRIBUTE AND DEFICIT VALUE  ～72

～70

| ITEM | VALUE | DEFICIT | CONTRIBUTE TO PREDICTION IN CASE OF FILLING |
|---|---|---|---|
| AGE | 30 YEARS OLD | | |
| GENDER | — | ○ | IF "FEMALE - 30 YEARS OLD", PURCHASE PROBABILITY DECREASES TO 12.4% |
| RESIDENTIAL PREFECTURE | CHIBA | | |
| GENRE | ROCK | | |
| DEVICE | — | ○ | IF "SMARTPHONE", PURCHASE PROBABILITY DECREASES TO 21.1% |
| ... | ... | ... | ... |

# FIG.11

~80

PREDICTION CONTRIBUTION OF "PURCHASE"    ~81

| CLUSTER ID | EXPLANATION | DATA OCCUPANCY RATIO |
|---|---|---|
| CLUSTER 1 | FORTIES, MALE | 43.2% |
| CLUSTER 2 | FEMALE, ROCK | 21.4% |
| CLUSTER 3 | NO CANCEL IN PAST, PREMIUM SUBSCRIPTION | 14.3% |

PREDICTION CONTRIBUTION OF "NOT PURCHASE"    ~82

| CLUSTER ID | EXPLANATION | DATA OCCUPANCY RATIO |
|---|---|---|
| CLUSTER 1 | FIFTIES, CLASSIC | 23.2% |
| CLUSTER 2 | 10 YEARS OF NUMBER OF YEARS DURING WHICH SUBSCRIPTION IS CONTINUED, FEMALE | 15.4% |
| CLUSTER 3 | CANCEL IN PAST, TOKYO | 18.3% |

# FIG.12

~84

PREDICTION ACCURACY IS LOW

| CLUSTER ID | EXPLANATION | PREDICTION ACCURACY |
|---|---|---|
| CLUSTER 1 | 1 YEAR OF NUMBER OF YEARS DURING WHICH SUBSCRIPTION IS CONTINUED, NO PREMIUM SUBSCRIPTION | 29.1% |
| CLUSTER 2 | FEMALE, TWENTIES | 33.8% |
| CLUSTER 3 | TWENTIES, MALE | 41.4% |

# FIG.13

| TOPIC ID | EXPLANATION |
|---|---|
| TOPIC 1 | 1 YEAR OF NUMBER OF YEARS DURING WHICH SUBSCRIPTION IS CONTINUED, FEMALE |
| TOPIC 2 | FORTIES, MALE |
| TOPIC 3 | FIFTIES, CLASSIC |
| . . . | |

| CLIENT ID | TOPIC MIXING RATIO | |
|---|---|---|
| A | TOPIC 2 80% | TOPIC 1 20% |
| B | TOPIC 1 100% | |
| C | TOPIC 4 50% | TOPIC 1 50% |
| . . . | | |

FEMALE, TWENTIES

EP 3 742 356 A1

# FIG.14

EP 3 742 356 A1

<table>
<tr><td colspan="2" align="center">**INTERNATIONAL SEARCH REPORT**</td><td colspan="2">International application No.<br>PCT/JP2018/047114</td></tr>
</table>

**A.   CLASSIFICATION OF SUBJECT MATTER**
Int.Cl.  G06N20/00(2019.01)i

According to International Patent Classification (IPC) or to both national classification and IPC

**B.   FIELDS SEARCHED**

Minimum documentation searched (classification system followed by classification symbols)
Int.Cl.  G06N20/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 8-249007 A (MITSUBISHI ELECTRIC CORP.) 27 September 1996, entire text (Family: none) | 1-20 |
| A | JP 2018-5640 A (TAKANO CO., LTD.) 11 January 2018, entire text (Family: none) | 1-20 |

☒  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 March 2019 (11.03.2019) | Date of mailing of the international search report<br>26 March 2019 (26.03.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/047114 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | 三品陽平ほか，Random Forest の寄与率を用いた効率的な特徴選択法の提案，SSII2013 第19回画像センシングシンポジウム 講演論文集 [CD-ROM], 12 June 2013, pp. 1-6, entire text, non-official translation (MISHINA, Yohei et al., "Proposal for efficient feature selection method using the contribution rate of Random Forest", Lecture proceedings [CD-ROM] of the 19th Symposium on Sensing via Image Information SSII2013) | 1-20 |
| A | CHANDRASHEKAR, Girish et al., "A survey on feature selection methods, Computers and Electrical Engineering [online]", Retrieved from the Internet: <URL:http://newiranians.ir/Chandrashekar%20-%20Feature%20Selection%20Methods%20-%202014.pdf>, vol. 40, 07 December 2013, [retrieved on 11 March 2019], pp. 16-28, entire text | 1-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017027145 A

**Non-patent literature cited in the description**

- Latent Dirichlet Allocation. **BLEI, DAVID M. ; NG, ANDREW Y. ; JORDAN, MICHAEL I.** Journal of Machine Learning Research. January 2003, 3